# EUROPEAN PATENT APPLICATION

(11) **EP 4 588 607 A1**
(43) Date of publication of application: **23.07.2025**
(21) Application number: 22958819.9
(22) Date of filing: 15.09.2022
(51) Int. Cl.: B23K 26/34

(54) **PROCESSING SYSTEM, DATA STRUCTURE, AND PROCESSING METHOD**

(71) Applicant: NIKON CORPORATION, Tokyo 140-8601 (JP)
(72) Inventor: FUNATSU, Takayuki, Tokyo 140-8601 (JP); KITSUDA, Shin, Tokyo 140-8601 (JP); ICHIJO, Tsukasa, Tokyo 140-8601 (JP)
(74) Representative: Hoffmann Eitle
(86) International application number: PCT/JP2022/034586
(87) International publication number: WO 2024/057496

(57) **Abstract**

A processing system includes a processing device including irradiation optics and a material supply unit and configured to mold a molding object, a measuring device configured to acquire information about a size of the molten pool formed by radiating a processing beam, a storage device configured to store information about the size of the molten pool in association with information about a position of the molten pool, and a controller. The controller controls the processing device so that the size of the molten pool formed by radiating the processing beam coincides with a size of the molten pool read from the storage device.

## Description

### TECHNICAL FIELD

The present invention relates to a technical field of a processing system, a data structure, and a processing method for processing objects.

### BACKGROUND ART

An example of a processing system for processing objects is described in Patent Document 1 (United States Patent No. 7043330).

One of the technical challenges of this processing system is to appropriately process objects.

### SUMMARY OF INVENTION

According to a first aspect, there is provided a processing system including: a processing device configured to mold a molding object and including irradiation optics capable of radiating a processing beam and a material supply unit capable of supplying a molding material to a portion where a molten pool is formed by radiating the processing beam; a measuring device configured to acquire information about a size of the molten pool formed by radiating the processing beam; a storage device configured to store the information about the size of the molten pool acquired by the measuring device in association with information about a position of the molten pool; and a controller, wherein the controller reads the information about the size of the molten pool from the storage device and controls the processing device so that the size of the molten pool formed by radiating the processing beam coincides with the size of the molten pool read from the storage device.

According to a second aspect, there is provided a processing system including: a processing device configured to mold a molding object and including irradiation optics capable of radiating a processing beam, a material supply unit capable of supplying a molding material to a portion where a molten pool is formed by radiating the processing beam, a moving device capable of moving an irradiation position of the processing beam along a target trajectory based on a processing path, and deflection optics capable of deflecting the processing beam in a direction intersecting the target trajectory; a measuring device configured to acquire information about a size of the molten pool formed by radiating the processing beam; and a controller, wherein the controller controls the processing device on the basis of a measurement result of the measuring device and changes a measurement target area of the measuring device in the molten pool on the basis of a deflection condition that is a condition for deflecting the processing beam.

According to a third aspect, there is provided a processing system including: a processing device configured to mold a molding object and including irradiation optics capable of radiating a processing beam and a material supply unit capable of supplying a molding material to a portion where a molten pool is formed by radiating the processing beam; a measuring device configured to acquire information about the molten pool formed by radiating the processing beam; a storage device configured to store information about the size of the molten pool acquired by the measuring device in association with information about a position of the molten pool; and a controller, wherein the controller reads the information about the molten pool from the storage device and controls the processing device so that the molten pool formed by radiating the processing beam reproduces the molten pool read from the storage device.

According to a fourth aspect, there is provided a processing system including: a processing device including irradiation optics capable of radiating a processing beam and configured to process an object; a measuring device configured to acquire information about a molten pool formed by radiating the processing beam; a storage device configured to store information about the molten pool acquired by the measuring device in association with information about a position of the molten pool; and a controller, wherein the controller controls the processing device on the basis of the information about the molten pool read from the storage device.

According to a fifth aspect, there is provided a processing system including: a processing device configured to process an object and including irradiation optics capable of radiating a processing beam, a first moving device capable of moving an irradiation position of the processing beam along a target trajectory based on a processing path, and a second moving device capable of moving the processing beam in a direction intersecting the target trajectory; a measuring device capable of acquiring information about a molten pool formed by radiating the processing beam; and a controller, wherein the controller decides a measurement target area of the measuring device on the basis of a movement condition that is a condition for moving the processing beam in the second moving device.

According to a sixth aspect, there is provided a data structure for use in a processing device configured to mold a molding object and including irradiation optics capable of radiating a processing beam and a material supply unit capable of supplying a molding material to a portion where a molten pool is formed by radiating the processing beam, wherein information about a size of the molten pool formed by the processing device is associated with a position where the molten pool is formed.

According to a seventh aspect, there is provided a data structure for use in a processing device capable of molding a molding object and including irradiation optics capable of radiating a processing beam, a material supply unit capable of supplying a molding material to a portion where a molten pool is formed by radiating the processing beam, a moving device capable of moving an irradiation position of the processing beam along a target trajectory based on a processing path, and deflection optics capable of deflecting the processing beam in a direction intersecting the target trajectory, wherein a deflection condition that is a condition for deflecting the processing beam is associated with information about a measurement target area measured by the measuring device.

According to an eighth aspect, there is provided a processing method including: radiating a processing beam to an object; molding a molding object by supplying a molding material to a portion where a molten pool is formed by radiating the processing beam; acquiring information about a size of the molten pool formed by radiating the processing beam; storing the acquired information about the molten pool in association with information about a position of the molten pool; and reading the information about the size of the molten pool and controlling the molding so that the size of the molten pool formed by radiating the processing beam coincides with the size of the molten pool read from the storage device.

According to a ninth aspect, there is provided a processing method including: radiating a processing beam to an object; moving an irradiation position of the processing beam along a target trajectory based on a processing path; deflecting the processing beam in a direction intersecting the target trajectory; molding a molding object by supplying a molding material to a portion where a molten pool is formed by radiating the processing beam; acquiring information about a size of the molten pool formed by radiating the processing beam; and controlling molding on the basis of the acquired information about the size of the molten pool and changing a measurement target area of the molten pool for acquiring information about the size of the molten pool on the basis of a deflection condition that is a condition for deflecting the processing beam.

According to a tenth aspect, there is provided a processing method including: radiating a processing beam to an object; molding a molding object by supplying a molding material to a portion where a molten pool is formed by radiating the processing beam; acquiring information about the molten pool formed by radiating the processing beam; storing the acquired information about the molten pool in association with information about a position of the molten pool; and reading the information about the molten pool and controlling the molding so that the molten pool formed by radiating the processing beam reproduces the read molten pool.

The operation and other advantages of the present invention will become apparent from the detailed description below.

### BRIEF DESCRIPTION OF DRAWINGS

[FIG. 1] A cross-sectional view showing a structure of a processing system of the present embodiment.
[FIG. 2] A system configuration diagram showing a system configuration of the processing system of the present embodiment.
[FIG. 3] A perspective view showing a structure of irradiation optics.
[FIGS. 4(a) to 4(e)] Cross-sectional views showing states in which processing light is radiated to a certain area on a workpiece and a molding material is supplied.
[FIGS. 5(a) to 5(c)] Cross-sectional views showing a process of forming a three-dimensional structure.
[FIG. 6(a)] A plan view showing a movement trajectory of a target irradiation area in a molding unit area.
[FIG. 6(b)] A plan view showing an example in which the movement of the target irradiation area and the movement of a processing head/stage device operate in combination.
[FIG. 6(c)] A schematic diagram showing an area where a molding object is formed when an operation shown in FIG. 6(b) is performed.
[FIG. 7] An example of a workpiece image.
[FIG. 8(a)] A plan view showing a movement trajectory of the target irradiation area when a width of the molding unit area is changed.
[FIG. 8(b)] A plan view showing an example in which the processing head/stage device is moved while a size of the molding unit area is changed.
[FIG. 8(c)] A schematic diagram showing an area where a molding object is formed when the operation shown in FIG. 8(b) is performed.
[FIG. 9(a)] A plan view showing a movement trajectory of the target irradiation area when the movement speed of the target irradiation area is sufficiently fast with respect to a movement speed of the processing head/stage device.
[FIG. 9(b)] A plan view showing a movement trajectory of the target irradiation area when the movement speed of the target irradiation area is moderately fast with respect to the movement speed of the processing head/stage device.
[FIG. 9(c)] A plan view showing a movement trajectory of the target irradiation area when the movement speed of the target irradiation area is slow with respect to the movement speed of the processing head/stage device.
[FIG. 10] A schematic diagram showing an irradiation trajectory of laser light for a molding object.
[FIG. 11] A plan view showing a movement trajectory of the molding unit area on a molding surface.
[FIG. 12] A plan view showing an example of the movement trajectory of the target irradiation area in the molding unit area.
[FIG. 13] A plan view showing another example of the movement trajectory of the target irradiation area in the molding unit area.
[FIG. 14] A plan view showing another example of the movement trajectory of the target irradiation area in the molding unit area.
[FIG. 15] An explanatory diagram showing a method for detecting a molten pool from a workpiece image.
[FIG. 16] An explanatory diagram showing an example of the method for detecting the molten pool from the workpiece image.
[FIGS. 17(a) to 17(f)] An image processing method when a plurality of integral thresholds are provided.
[FIGS. 18(a) and 18(b)] Workpiece images in the prior art.
[FIGS. 18(c) and 18(d)] Workpiece images in the present embodiment.
[FIG. 19] An enlarged view showing layer M and layer N in one molding object.
[FIG. 20] An enlarged view showing layers M and N in a first molding object and layers M#2 and N#2 in a second molding object.
[FIG. 21] A workpiece image when the center and the left and right widths of the molten pool are controlled so that they are uniform.
[FIG. 22] A control method for making the center and left and right widths of the molten pool uniform.
[FIG. 23] A control method for equalizing the number of left pixels and the number of right pixels in the molten pool.

### DESCRIPTION OF EMBODIMENTS

Hereinafter, embodiments of a processing method, a processing system, a measurement method, and a measurement system will be described with reference to the drawings. Hereinafter, the embodiments of the processing method, the processing system, the measurement method, and the measurement system will be described using a processing system SYS that molds a molding object BO on a workpiece W by performing an additional process on the workpiece W, which is an example of an object. In particular, hereinafter, the embodiments of the processing method, the processing system, the measurement method, and the measurement system will be described using the processing system SYS that performs an additional process based on a laser metal deposition method (LMD). The additional process based on the laser metal deposition method is an additional process in which a molding material M supplied to the workpiece W is molten with processing light EL (i.e., an energy beam having the form of light) to mold the molding object BO integrated with the workpiece W or separable from the workpiece W.

Furthermore, the laser metal deposition (LMD) method may be referred to as direct metal deposition, directed energy deposition, laser cladding, laser engineered net shaping, direct light fabrication, laser consolidation, shape deposition manufacturing, wire-fed laser deposition, gas through wire, laser powder fusion, laser metal forming, selective laser powder remelting, laser direct casting, laser powder deposition, laser additive manufacturing, or laser rapid forming.

In the following description, a positional relationship of various types of constituent elements constituting the processing system SYS will be described using an XYZ Cartesian coordinate system defined from an X-axis, a Y-axis, and a Z-axis perpendicular to each other. Furthermore, in the following description, for the convenience of description, it is assumed that each of the X-axis direction and the Y-axis direction is a horizontal direction (i.e., a predetermined direction in a horizontal plane) and the Z-axis direction is a vertical direction (i.e., a direction perpendicular to the horizontal plane, substantially, a vertical direction). Moreover, rotation directions (in other words, inclination directions) around the X-axis, the Y-axis, and the Z-axis are referred to as a θX direction, a θY direction, and a θZ direction, respectively. Here, the Z-axis direction may be used as a gravity direction. Moreover, the XY plane may be used as a horizontal direction.

### (1) Structure of processing system SYS

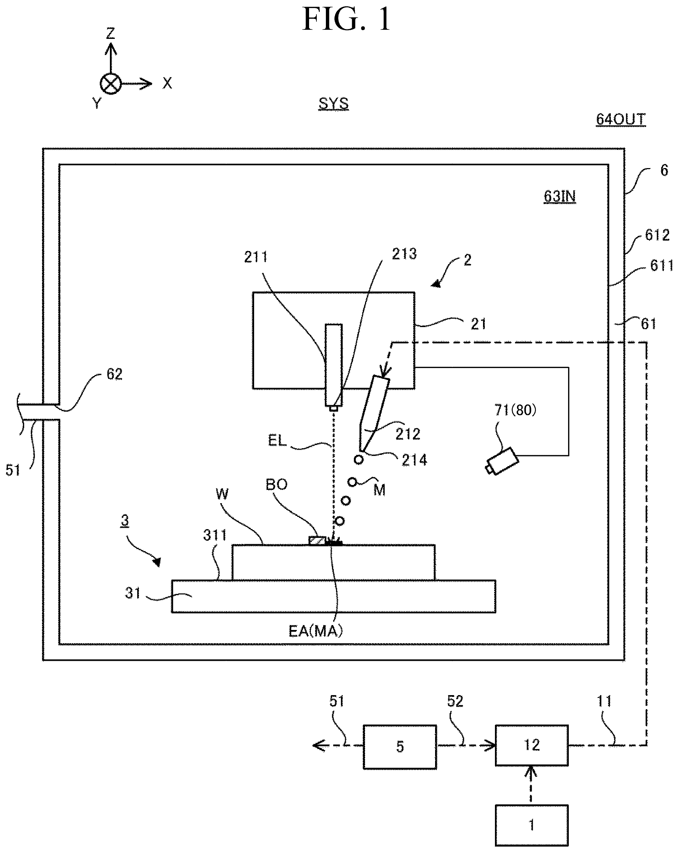

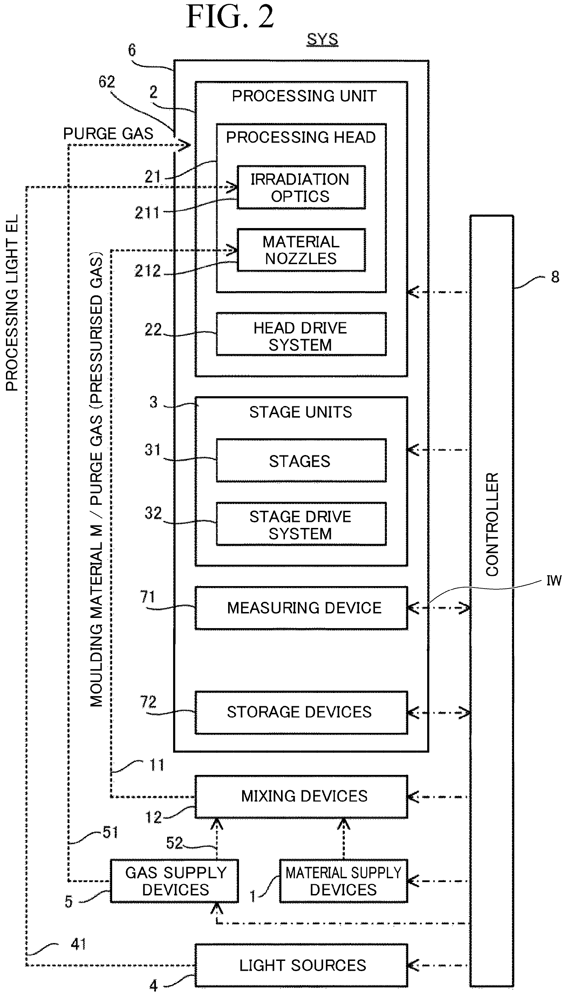

First, the structure of the processing system SYS of the present embodiment will be described with reference to FIGS. 1 and 2. FIG. 1 is a cross-sectional view showing an example of the structure of the processing system SYS of the present embodiment. FIG. 2 is a system configuration diagram showing an example of a system configuration of the processing system SYS of the present embodiment.

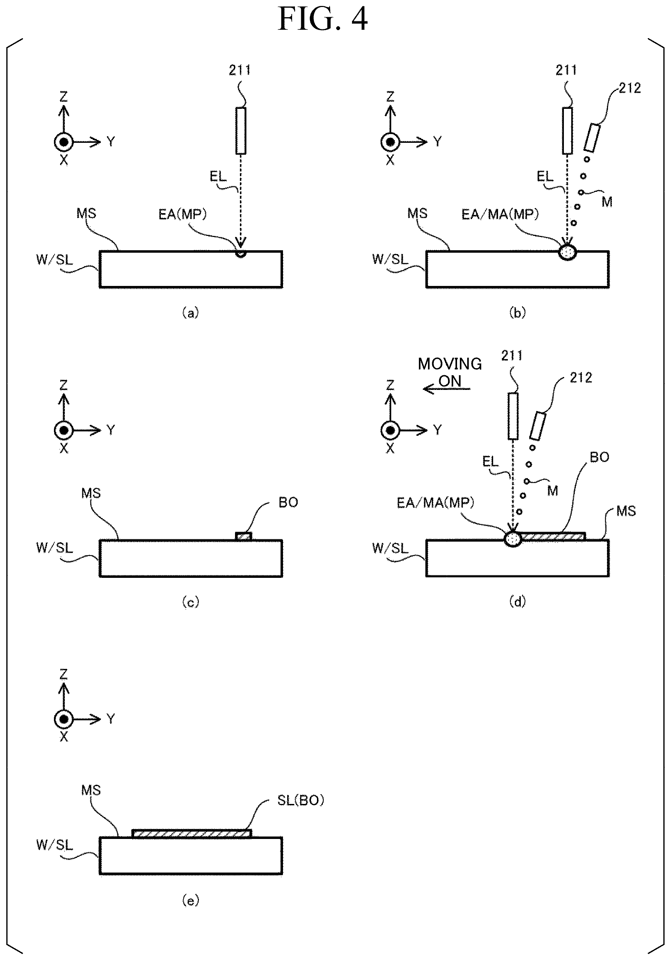

The processing system SYS is capable of molding (in other words, forming) the molding object BO. Furthermore, the molding object BO in the present embodiment may be any object molded by the processing system SYS. The molding object BO is typically a three-dimensional object having a size in any direction among three-dimensional directions (i.e., a three-dimensional object, in other words, an object having sizes in the X-, Y-, and Z-axis directions). An example of the molding object BO is a three-dimensional structure ST having a desired three-dimensional shape (see FIG. 4(c)). An example of the molding object BO can be a part of the three-dimensional structure ST. An example of the molding object BO can be any object molded in a process of molding the three-dimensional structure ST. As will be described below, when the three-dimensional structure ST includes a plurality of structural layers SL (see FIGS. 4(a) to 4(c)), an example of the molding object BO can be the structural layer SL. An example of the molding object BO can be a part of the structural layer SL. An example of the molding object BO may be any object molded in the process of molding the structural layer SL. However, the molding object BO is not limited to an object exemplified herein.

The processing system SYS can mold the molding object BO on the workpiece W that serves as a base (e.g., a base metal) for molding the molding object BO. That is, the processing system SYS performs molding on the workpiece W. The processing system SYS can mold the molding object BO by performing an additional process on the workpiece W. When the workpiece W is a stage 31 to be described below, the processing system SYS can mold the molding object BO on the stage 31. When the workpiece W is a placed object that is an object placed on the stage 31, the processing system SYS can mold the molding object BO on the placed object. In this case, the processing system SYS may mold the molding object BO integrated with the placed object. An operation for molding the molding object BO integrated with the placed object is equivalent to an operation of adding a new structure to the placed object. Furthermore, the existing structure may be, for example, an object having a defective part (e.g., an object requiring repair). Alternatively, the processing system SYS may mold the molding object BO that can be separated from the placed object. The placed object placed on the stage 31 may be another molding object BO (i.e., an existing structure (a primary molding object or a first molding object)) molded by the processing system SYS. Furthermore, FIG. 1 shows an example in which the workpiece W is an existing structure held by the stage 31. Moreover, the description will be given below using an example in which the workpiece W is an existing structure held by the stage 31.

As described above, the processing system SYS can mold the molding object BO by the laser metal deposition method. In other words, it can be said that the processing system SYS is a 3D printer that uses additive manufacturing technology to mold objects. Furthermore, the additive manufacturing technology is also referred to as rapid prototyping, rapid manufacturing, or additive manufacturing.

The processing system SYS molds the molding object BO by processing the molding material M using the processing light EL, which is a processing beam. The molding material M is a material that can be molten when it is irradiated with processing light EL of a predetermined intensity or higher. As this molding material M, for example, at least one of a metallic material and a resinous material can be used. However, as the molding material M, other materials different from the metallic material and the resinous material may be used. In one example, the molding material M is a powdery material. That is, the molding material M is a powder. The powder may contain a granular material in addition to the powdery material. The molding material M may contain, for example, a powder having a particle size that fits in a range of 90 micrometers ± 40 micrometers. An average particle size of the powder constituting the molding material M may be, for example, 75 micrometers or less, may be in the range of 10 micrometers to 25 micrometers, or may be other sizes. For example, the average particle size of the powder is approximately 200, 190, 180, 170, 160, 150, 140, 130, 120, 110, 100, 95, 90, 85, 80, 75, 70, 65, 60, 55, 50, 45, 40, 35, 30, 25, 20, 15, or 10 micrometers or less. In another example, the molding material M can be a material other than a powder. For example, at least one of a wire-shaped molding material and a gaseous molding material may be used as the molding material M. The above numerical values are examples and the present invention is not limited thereto.

A type of the workpiece W may be the same as a type of molding material M. For example, when the metallic material is used as the molding material M, the workpiece W may be a metal of a type identical to (or different from) a type of the molding material M. For example, when a resinous material is used as the molding material M, the workpiece W may be a resin of a type identical to (or different from) the type of molding material M.

To mold the molding object BO, the processing system SYS includes material supply devices 1, a processing device 2, a stage device 3, light sources 4, gas supply devices 5, a housing 6, a measuring device 71, storage devices 72, and a controller 8 as shown in FIGS. 1 and 2. At least a part of each of the processing device 2, the stage device 3, and the measuring device 71 is accommodated in a chamber space 63IN inside the housing 6. In this case, the processing system SYS may perform an additional process in the chamber space 63IN. Furthermore, at least one of the processing device 2 and the stage device 3 may not be accommodated in the chamber space 63IN inside the housing 6.

The material supply device 1 supplies the molding material M to the processing device 2. Specifically, the material supply device 1 and the processing device 2 (in particular, a material nozzle 212 to be described below) are connected via a supply pipe 11. The material supply device 1 supplies the molding material M to the processing device 2 via the supply pipe 11. At this time, the material supply device 1 may supply a desired amount of molding material M corresponding to a required amount so that an amount of molding material M required per unit time for the processing device 2 to perform an additional process is supplied to the processing device 2. The material supply device 1 is an example of a "material supply unit."

The processing device 2 molds the molding object BO using the molding material M supplied from the material supply device 1. To mold the molding object BO using the molding material M, the processing device 2 includes a processing head 21 and a head drive system 22. Furthermore, the processing head 21 includes irradiation optics 211 and material nozzles (i.e., a supply system or supply device that supplies the molding material M) 212. The processing head 21 and the head drive system 22 are accommodated in the chamber space 63IN. However, at least a part of the processing head 21 and/or the head drive system 22 may be located in an external space 64OUT, which is a space outside the housing 6. Furthermore, the external space 64OUT may be a space accessible to an operator of the processing system SYS.

The irradiation optics 211 is optics (e.g., light-focusing optics) for outputting the processing light EL from an injection unit 213. Specifically, the irradiation optics 211 is optically connected to the light source 4 that emits the processing light EL via an optical transmission member 41 such as an optical fiber or a light pipe. In the example shown in FIG. 2, the molding system SYS includes one light source 4 and the irradiation optics 211 is optically connected to the light source 4 via the optical transmission member 41. The irradiation optics 211 emits the processing light EL propagated from the light source 4 via the optical transmission member 41. For example, a configuration having a plurality of irradiation optics 211 may be used.

The irradiation optics 211 radiates the processing light EL downward (i.e., on the -Z side) from the irradiation optics 211. The stage 31 is located below the irradiation optics 211. When the workpiece W is placed on the stage 31, the irradiation optics 211 radiates the output processing light EL to the workpiece W (in particular, the surface of the workpiece W). Specifically, the irradiation optics 211 can radiate the processing light EL to a target irradiation area (a target irradiation position) EA set on or near the workpiece W as an area where the processing light EL is radiated (typically focused). Furthermore, the state of the irradiation optics 211 can be switched between a state in which the target irradiation area EA is irradiated with the processing light EL and a state in which the target irradiation area EA is not irradiated with the processing light EL under the control of the controller 8. Furthermore, a direction of the processing light EL emitted from the irradiation optics 211 is not limited to a directly downward direction (i.e., a direction coinciding with the -Z-axis direction), and may be, for example, a direction inclined by a predetermined angle with respect to the Z-axis.

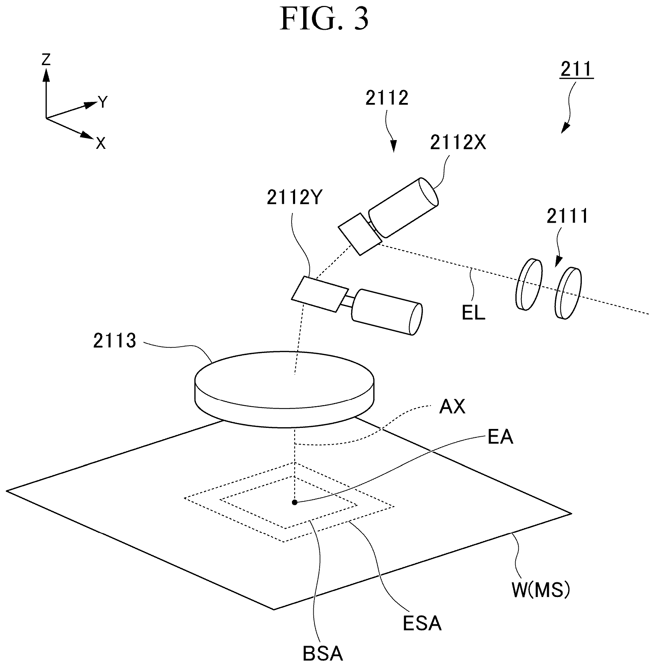

An example of the structure of the irradiation optics 211 is shown in FIG. 3. As shown in FIG. 3, the irradiation optics 211 may include state-controlling optics 2111, a Galvano-mirror 2112, and an fθ lens 2113.

The state-controlling optics 2111 is optics capable of controlling the state of the processing light EL emitted by the irradiation optics 211. For example, the state-controlling optics 2111 may include focus-controlling optics capable of controlling (e.g., changing) a light-focusing position (i.e., a convergence position) of the processing light EL. The state-controlling optics 2111 may control a light-focusing position of the processing light EL by changing a distance from (a positional relationship with) the fθ lens 2113, changing a distance from (a positional relationship with) the material nozzle 212, changing a distance from (a positional relationship with) a powder supply position of the material nozzle 212, or the like in a moving direction of the processing light EL. The focus-controlling optics may include, for example, a plurality of lenses arranged in the moving direction of the processing light EL. In this case, a light-focusing position of the processing light EL may be changed by moving at least one of the plurality of lenses in an optical axis direction. Moreover, the state-controlling optics 2111 may include intensity-controlling optics that can control (e.g., change) the intensity of the processing light EL. The intensity-controlling optics may include a shutter that can block at least a part of the processing light EL, a variable neutral density (ND) filter, or the like. However, the irradiation optics may not include the state-controlling optics 2111.

The processing light EL passing through the state-controlling optics 2111 is input to the Galvano-mirror 2112. The Galvano-mirror 2112 changes an output direction of the processing light EL from the Galvano-mirror 2112 by deflecting the processing light EL (i.e., changing a deflection angle (an output angle) of the processing light EL). For this reason, the Galvano-mirror 2112 may be referred to as a deflection member or deflection optics. When the output direction of the processing light EL from the Galvano-mirror 2112 is changed, a position where the processing light EL is output from the processing head 21 is changed. When the position where the processing light EL is output from the processing head 21 is changed, a target irradiation area EA where the processing light EL is radiated onto the surface of the workpiece W (more specifically, a molding surface MS to be described below where an additional process is performed) is moved. That is, the irradiation position where the processing light EL is radiated onto the molding surface MS moves. In other words, the processing light EL moves on the molding surface MS.

The Galvano-mirror 2112 includes, for example, an X scanning mirror 2112X and a Y scanning mirror 2112Y. Furthermore, each of the X scanning mirror 2112X and the Y scanning mirror 2112Y may be referred to as the Galvano-mirror 2112. Each of the X scanning mirror 2112X and the Y scanning mirror 2112Y is a variable inclination angle mirror in which an angle for an optical path of the processing light EL input to each mirror can be changed. The X scanning mirror 2112X reflects the processing light EL toward the Y scanning mirror 2112Y. The X scanning mirror 2112X can swing or rotate around an axis of rotation along the Y-axis. By swinging or rotating the X scanning mirror 2112X, the processing light EL scans the molding surface MS in the X-axis direction. For example, when only the X scanning mirror 2112X is operated, the target irradiation area EA moves in the X-axis direction on the molding surface MS due to the swing or rotation of the X scanning mirror 2112X. The Y scanning mirror 2112Y reflects the processing light EL toward the fθ lens 2113. The Y scanning mirror 2112Y can swing or rotate around the axis of rotation along the X-axis. By swinging or rotating the Y scanning mirror 2112Y, the processing light EL is directed to scan the molding surface MS in the Y-axis direction. For example, when only the Y scanning mirror 2112Y is operated, the target irradiation area EA moves in the Y-axis direction on the molding surface MS due to the swing or rotation of the Y scanning mirror 2112Y. Furthermore, by simultaneously operating the X scanning mirror 2112X and the Y scanning mirror 2112Y, it is possible to two-dimensionally move the target irradiation area EA on the molding surface MS.

This Galvano-mirror 2112 can direct the processing light EL to scan the molding shot area ESA. The irradiation optics 211 can radiate the processing light EL to the molding shot area ESA determined on the basis of the irradiation optics 211. The target irradiation area EA can be moved in the molding shot area ESA determined on the basis of the irradiation optics 211. For example, when a plurality of irradiation optics 211 are provided, molding shot areas ESA in the irradiation optics 211 may be the same or each molding shot area ESA may be partially different. When the plurality of molding shot areas ESA coincide with or partially overlap each other, the direction of the processing light EL output from the plurality of irradiation optics 211 may be a direction inclined by a predetermined angle with respect to the Z-axis. The optical axes on the molding surfaces MS sides of the irradiation optics 211 (typically the optical axes of the light-focusing optics (the fθ lenses 2113) of the irradiation optics 211) on or near the molding surfaces MS may intersect each other.

The X scanning mirror 2112X can move the target irradiation area EA in the X-axis direction in the molding shot area ESA. Furthermore, the Y scanning mirror 2112Y can move the target irradiation area EA in the Y-axis direction in the molding shot area ESA. Furthermore, as described above, the state-controlling optics 2111 can change the focusing position of the processing light EL in the Z-axis direction. Therefore, the irradiation optics 211 can move the irradiation position of the processing light EL in the molding shot area ESA (specifically, the position of the target irradiation area EA in each of the X- and Y-axis directions and the light-focusing position in the Z-axis direction) in the X-axis direction, the Y-axis direction, and the Z-axis direction. More specifically, the X scanning mirror 2112X and the Y scanning mirror 2112Y can allow the target irradiation area EA to move two-dimensionally on the XY plane and to move a light-focusing position in the Z-axis direction. That is, the irradiation optics 211 can set the irradiation position of the processing light EL in the three-dimensional space on the molding shot area ESA side of the irradiation optics 211 to any position. Moreover, the irradiation optics 211 can move the processing light EL in each of the X-axis direction, the Y-axis direction, and the Z-axis direction in the molding shot area ESA.

The molding shot area ESA is a maximum area (in other words, a maximum range) in which the processing head 21 can perform an additional process using the processing light EL in a state in which a positional relationship between the irradiation optics 211 and the molding surface MS is fixed. Typically, the molding shot area ESA may coincide with the maximum scanning range of the processing light EL deflected by the Galvano-mirror 2112 in a state in which the positional relationship between the irradiation optics 211 and the molding surface MS is fixed. That is, the molding shot area ESA may be an area determined on the basis of an effective movable range of the Galvano-mirror 2112. Moreover, because the processing light EL is radiated to the molding surface MS via the fθ lens 2113, the molding shot area ESA may be an area determined on the basis of the optical effective range of the fθ lens 2113.

The molding shot area ESA may be defined in a plane perpendicular to the optical axis AX of the irradiation optics 211. The optical axis AX of the irradiation optics 211 is an axis in a moving direction of the processing light EL radiated to the molding surface MS. The optical axis AX of the irradiation optics 211 may be the optical axis of the fθ lens 2113. Alternatively, when the moving direction of the processing light EL is changed by a deflection member such as a mirror after the processing light EL is output from the fθ lens 2113, an optical axis AX of the irradiation optics 211 may be different from the optical axis of the fθ lens 2113. In the following description, an example in which the optical axis AX is an axis along the Z-axis will be described.

The processing head 21 may perform an additional process in the molding unit area BSA set in the molding shot area ESA. Furthermore, as in the molding shot area ESA, for example, when a plurality of irradiation optics 211 are provided, the molding unit areas BSA in the irradiation optics 211 may coincide with each other or the molding unit areas BSA may be partially different from each other.

The molding unit area BSA is an area (in other words, a range) in which the processing head 21 actually performs an additional process using the processing light EL in a state in which the positional relationship between the irradiation optics 211 and the molding surface MS is fixed. That is, the processing head 21 may perform an additional process on the entire surface of the molding unit area BSA. The molding unit area BSA is an area (in other words, a range) that the processing head 21 actually scans with the processing light EL in a state in which the positional relationship between the irradiation optics 211 and the molding surface MS is fixed. The molding unit area BSA is an area where the target irradiation area EA actually moves in a state in which the positional relationship between the irradiation optics 211 and the molding surface MS is fixed. Such a molding unit area BSA coincides with at least a part of the molding shot area ESA. For example, the molding unit area BSA may coincide with the molding shot area ESA. Alternatively, the molding unit area BSA may coincide with a part of the molding shot area ESA. That is, the molding unit area BSA may be smaller than the molding shot area ESA. In this case, the smaller the rotation amount of the Galvano-mirror 2112 (i.e., the smaller the rotation angle of the Galvano-mirror 2112), the smaller the area scanned by the processing light EL. Therefore, the irradiation optics 211 controls the rotation amount of the Galvano-mirror 2112 (more specifically, the rotation amounts of the X scanning mirror 2112X and the Y scanning mirror 2112Y) under the control of the controller 8 so that the molding unit area BSA of a desired size may be set in the molding shot area ESA.

In the example shown in FIG. 3, the shape of the molding unit area BSA is rectangular. However, the shape of the molding unit area BSA may be a shape different from the rectangular shape (e.g., a round, oval, or polygonal shape). Moreover, when a rectangular shape is used as the shape of the molding unit area BSA, the corners of the rectangle may be rounded. A size in the X-axis direction and a size in the Y-axis direction of the molding unit area BSA may be several millimeters. However, the size of the molding unit area BSA is not limited to several millimeters. For example, the size of the molding unit area BSA can be approximately 10, 9, 8, 7, 6, 5, 4, 3, 2, or 1 millimeter or less. It can be said that the same is true for the shape of the molding shot area ESA. The above numerical values are examples and are not limited thereto.

When the processing light EL is radiated to the molding surface MS in units of molding unit areas BSA, the molding unit area BSA is scanned with the processing light EL by the Galvano-mirror 2112. For this reason, compared to the case where the processing light EL is radiated to the molding surface MS without using the Galvano-mirror 2112, the distribution of the magnitude of the amount of heat transmitted from the processing light EL to the molding unit area BSA is unlikely to vary in the molding unit area BSA. That is, the amount of heat transmitted from the processing light EL to the molding unit area BSA can be made uniform. As a result, the molding system SYS can mold the molding object on the molding surface MS with relatively high molding accuracy.

However, the molding system SYS may not radiate the processing light EL to the molding surface MS in units of molding unit areas BSA. The molding system SYS may radiate the processing light EL to the molding surface MS without using the Galvano-mirror 2112. In this case, the target irradiation area EA may move on the molding surface MS along with the movement of at least one of the processing head 21 and the stage 31.

The fθ lens 2113 is optics for outputting the processing light EL from the Galvano-mirror 2112 toward the molding surface MS. In particular, the fθ lens 2113 is an optical element capable of focusing the processing light EL from the Galvano-mirror 2112 on a light-focusing surface. For this reason, the fθ lens 2113 may be referred to as a light-focusing member. The light-focusing surface of the fθ lens 2113, for example, may be set to the molding surface MS. Furthermore, the irradiation optics 211 may include the light-focusing member (the light-focusing optics) different from the fθ lens 2113.

While the processing head 21 includes a part of the irradiation optics 211, another part of the irradiation optics 211 may be located outside the processing head 21.

Returning to FIGS. 1 and 2, a supply outlet 214 is formed in the material nozzle 212. The material nozzle 212 supplies (e.g., outputs, injects, ejects, or blows) the molding material M from the supply outlet 214. For this reason, the material nozzle 212 may be referred to as a material supply member. The material nozzle 212 is physically connected to the material supply device 1 that is a supply source of the molding material M via the supply pipe 11 and the mixing device 12. The material nozzle 212 supplies the molding material M supplied from the material supply device 1 via the supply pipe 11 and the mixing device 12. The material nozzle 212 may pump the molding material M supplied from the material supply device 1 via the supply pipe 11. That is, the molding material M from the material supply device 1 and the conveyance gas (i.e., a pumped gas, for example, an inert gas such as nitrogen or argon) may be mixed in the mixing device 12 and then pumped to the material nozzle 212 via the supply pipe 11. As a result, the material nozzle 212 supplies the molding material M together with the conveyance gas. As the conveyance gas, for example, a purge gas supplied from the gas supply device 5 is used. However, as the conveyance gas, a gas supplied from a gas supply device different from the gas supply device 5 may be used. Although the material nozzle 212 is depicted in the form of a tube in FIG. 1, the shape of the material nozzle 212 is not limited to this shape. The material nozzle 212 supplies the molding material M to a target or a target area in the chamber space 63IN. The material nozzle 212 supplies the molding material M downward (i.e., on the -Z side) from the material nozzle 212. The stage 31 is located below the material nozzle 212. When the workpiece W is mounted in the stage 31, the material nozzle 212 supplies the molding material M toward the workpiece W or in the vicinity of the workpiece W. The moving direction of the molding material M supplied from the material nozzle 212 is a direction inclined by a predetermined angle (an acute angle as an example) in the Z-axis direction, but may be on the -Z side (i.e., in a directly downward direction). The inclination of the material nozzle 212 is not limited to the above and can be set arbitrarily.

The material nozzle 212 supplies the molding material M to a portion to which the processing light EL is radiated from the irradiation optics 211. That is, the material nozzle 212 supplies the molding material M to the target irradiation area EA to which the irradiation optics 211 radiates the processing light EL. For this reason, the material nozzle 212 and the irradiation optics 211 are aligned with each other so that the target supply area MA set on or in the vicinity of the workpiece W as an area where the material nozzle 212 supplies the molding material M coincides with (or at least partially overlaps) the target irradiation area EA. In an example, the material nozzle 212 may supply the molding material M to the molten pool MP (see FIG. 4 or the like to be described below) formed by the processing light EL output from the irradiation optics 211. Furthermore, the sizes of the target supply area MA and the target irradiation area EA may not be the same, and, for example, the target supply area MA may be an area larger than the target irradiation area EA. Moreover, the target supply area MA may be smaller than the target irradiation area EA. In another example, the material nozzle 212 may not supply the molding material M to the molten pool MP. For example, the processing system SYS may melt the molding material M with the processing light EL before the molding material M from the material nozzle 212 reaches the workpiece W and the molten molding material M may be attached to the workpiece W.

Thus, in the present embodiment, the processing system SYS molds the molding object BO by radiating the processing light EL from the light source 4 to the workpiece W using the irradiation optics 211 provided in the processing head 21 and supplying the molding material M from the material supply device 1 to the workpiece W using the material nozzle 212 provided on the processing head 21. For this reason, a device including at least one of the processing head 21 (i.e., the irradiation optics 211 and the material nozzles 212), the material supply device 1, and the light sources 4 mainly used for molding the molding object BO may be referred to as the processing device 2.

The head drive system 22 moves the processing head 21. The head drive system 22, for example, moves the processing head 21 in the chamber space 63IN. The head drive system 22 moves the processing head 21 along at least one of the X-axis, the Y-axis, and the Z-axis. When the processing head 21 moves along at least one of the X-axis and the Y-axis, each of the target irradiation area EA and the target supply area MA moves any position on the workpiece W or in the chamber space 63IN along at least one of the X-axis and the Y-axis. Furthermore, the head drive system 22 may move the processing head 21 in at least one rotation direction among the θX direction, the θY direction, and the θZ direction in addition to or instead of at least one of the X-axis, the Y-axis, and the Z-axis. In other words, the head drive system 22 may rotate the processing head 21 around at least one axis of the X-axis, the Y-axis, and the Z-axis. The head drive system 22 may change a posture of the processing head 21 around at least one axis of the X-axis, the Y-axis, and the Z-axis. The head drive system 22 includes, for example, an actuator such as a motor.

When the head drive system 22 moves the processing head 21, a relative position of each of the processing head 21, the stage 31, and the workpiece W supported by the stage 31 changes. That is, the relative positions of each of the irradiation optics 211 and the material nozzle 212 (the supply outlet 214) and each of the stage 31 and the workpiece W change. For this reason, the head drive system 22 may function as a position changing device for changing a relative positional relationship between each of the irradiation optics 211 and the material nozzle 212 (the supply outlet 214) and each of the stage 31 and the workpiece W. Furthermore, when the relative positions of the processing head 21, the stage 31, and the workpiece W change, the relative positions of the target irradiation area EA of the processing light EL radiated from the processing head 21, the stage 31 and the workpiece W change. For this reason, the head drive system 22 may function as a position changing device for changing the relative positional relationship between the target irradiation area EA and the stage 31 and the workpiece W. Furthermore, when the relative positions of the processing head 21, the stage 31, and the workpiece W change, the target irradiation area EA and the target supply area MA (additionally, the molten pool MP) move relative to the workpiece W. For this reason, the head drive system 22 may function as a moving device that relatively moves the target irradiation area EA and the target supply area MA (further, the molten pool MP) to the workpiece W.

The stage device 3 includes the stage 31. In the stage 31, the workpiece W which is an object is placed. Specifically, the workpiece W is placed on the placed surface 311, which is at least a part of the upper surface of the stage 31. The stage 31 may be able to hold the workpiece W placed on the stage 31. In this case, the stage 31 may include at least one of a mechanical chuck, an electrostatic chuck, a vacuum adsorption chuck, and the like to hold the workpiece W. Alternatively, the stage 31 may not be able to hold the workpiece W placed on the stage 31. In this case, the workpiece W may be placed on the stage 31 by a crank press. The irradiation optics 211 described above outputs the processing light EL to at least a part of a period during which the workpiece W is placed on the stage 31. Furthermore, the material nozzle 212 described above supplies the molding material M in at least a part of the period during which the workpiece W is placed on the stage 31.

The stage device 3 further includes a stage drive system 32. The stage drive system 32 moves the stage 31. The stage drive system 32 moves the stage 31 along at least one of the X-axis, the Y-axis, the Z-axis, the θX direction, the θY direction, and the θZ direction. When the stage drive system 32 moves the stage 31, the relative positions of the processing head 21 and the stage 31 and the workpiece W placed on the stage 31 change. For this reason, the stage drive system 32 may function as a position change device for changing the relative positional relationship between the processing head 21 and each of the stage 31 and the workpiece W. Furthermore, when the relative positions of the processing head 21, the stage 31, and the workpiece W change, the target irradiation area EA and the target supply area MA (additionally, the molten pool MP) move relative to the workpiece W.

The light source 4 outputs at least one of infrared light, visible light, and ultraviolet light, for example, as the processing light EL. However, other types of light may be used as the processing light EL. The processing light EL may include a plurality of pulsed light rays (i.e., a plurality of pulsed beams). The processing light EL may be laser light. In this case, the light source 4 may include a semiconductor laser such as a laser light source (e.g., a laser diode (LD)). The laser light source may be a fiber laser, a CO₂ laser, a YAG laser, an excimer laser, or the like. However, the processing light EL may not be a laser beam. The light source 4 may include any light source (e.g., at least one of a light emitting diode (LED) and a discharge lamp).

The gas supply device 5 is a supply source of a purge gas for purging the chamber space 63IN. The purge gas contains an inert gas. An example of the inert gas can be a nitrogen gas or an argon gas. The gas supply device 5 is connected to the chamber space 63IN via a supply port 62 formed in a partition wall member 61 of the housing 6 and a supply pipe 51 connecting the gas supply device 5 and the supply port 62. The gas supply device 5 supplies the purge gas to the chamber space 63IN via the supply pipe 51 and the supply port 62. As a result, the chamber space 63IN becomes a space purged by the purge gas. The purge gas supplied to the chamber space 63IN may be discharged from an outlet (not shown) formed in the partition wall member 61. Furthermore, the gas supply device 5 may be a cylinder in which an inert gas such as a nitrogen gas or an argon gas is stored. When the inert gas is the nitrogen gas, the gas supply device 5 may be a nitrogen gas generating device that generates the nitrogen gas using the atmosphere as a raw material.

As described above, when the material nozzle 212 supplies the molding material M together with the purge gas, the gas supply device 5 may supply the purge gas to the mixing device 12 to which the molding material M from the material supply device 1 is supplied in addition to the chamber space 63IN. Specifically, the gas supply device 5 may be connected to the mixing device 12 via the supply pipe 52 that connects the gas supply device 5 and the mixing device 12. As a result, the gas supply device 5 supplies the purge gas to the mixing device 12 via the supply pipe 52. In this case, the molding material M from the material supply device 1 may be supplied (specifically, pumped) to the material nozzle 212 through the supply pipe 11 by the purge gas supplied from the gas supply device 5 via the supply pipe 52. That is, the gas supply device 5 may be connected to the material nozzle 212 via the supply pipe 52, the mixing device 12, and the supply pipe 11. In this case, the material nozzle 212 supplies the molding material M together with the purge gas for pumping the molding material M from the supply outlet 214.

The housing 6 is a housing device that accommodates at least a part of each of the processing device 2, the stage device 3, and the measuring device 71 in the chamber space 63IN, which is an internal space of the housing 6. The housing 6 includes the partition wall member 61 that defines the chamber space 63IN. The partition wall member 61 is a member for separating the chamber space 63IN and the external space 64OUT of the housing 6. The partition wall member 61 faces the chamber space 63IN via an inner wall 611 and faces the external space 64OUT via an outer wall 612. In this case, a space surrounded by the partition wall member 61 (specifically, a space surrounded by the inner wall 611 of the partition wall member 61) becomes the chamber space 63IN. Furthermore, the door that can be opened and closed may be provided on the partition wall member 61. This door may be opened when the workpiece W is placed on the stage 31. The door may be opened when the workpiece W and/or the molding object BO is removed from the stage 31. The door may be closed during processing (i.e., during an addition process or a bonding process). In addition, an observation window (not shown) for visually recognizing the chamber space 63IN from the external space 64OUT of the housing 6 may be provided in the partition wall member 61.

The measuring device 71 is located in the chamber space 63IN. The measuring device 71 can measure at least a part of the workpiece W placed on the stage 31 in the chamber space 63IN. In one example, the measuring device 71 includes a detector that detects parameters related to a measurement target, a sensor that acquires information about the parameters of the measurement target, and/or a sensor that acquires an image of the measurement target. In particular, the measuring device 71 can measure the molten pool MP formed in the workpiece W by the processing light EL (i.e., formed in the workpiece W by the processing head 21). In this case, the measurement result of the measuring device 71 includes at least information about the size of the molten pool MP. For this reason, the measuring device 71 may function as a device capable of acquiring information about the molten pool MP (at least one physical parameter or shape parameter of the molten pool MP). In addition, the measuring device 71 may perform coaxial measurement in which observation is made from an axis identical to the optical axis of processing, such as, for example, through the lens (TTL) technology. In this case, for example, a semi-transmissive mirror may be installed between the fθ lens 2113 and the Y scanning mirror 2112Y in FIG. 3, and the molten pool MP may be observed from the side.

In the present embodiment, the measuring device 71 may be able to measure the size of the molten pool MP formed by radiating the processing light EL. For example, the measuring device 71 may be able to measure the size (i.e., length) of the molten pool MP in a direction along the surface of the workpiece W (or the molding surface MS to be described below where the molten pool MP is formed). The measuring device 71 may be capable of measuring the size (i.e., a length, a width, or the like) of the molten pool MP in at least one of the X-axis direction and the Y-axis direction. In this case, the measurement result of the measuring device 71 includes information about the size of the molten pool MP. For this reason, the measuring device 71 may function as a device capable of acquiring information about the size of the molten pool MP.

Furthermore, the measuring device 71 may function as a device capable of acquiring shape information (e.g., a physical parameter and a shape parameter) about a molten pool MP that is a molten pool MP continuously moved and formed at a position differing according to the processing light EL deflected by the deflection optics (the Galvano-mirror 2112). Even in this case, the measurement result of the measuring device 71 includes information about the size of the molten pool MP. The controller 8 may control molding by the processing system SYS on the basis of the shape information of the molten pool MP measured by the measuring device 71.

A measurement result of the measuring device 71 (e.g., information about the size of the molten pool MP) is output to the controller 8. The controller 8 may calculate a characteristic of the molten pool MP (e.g., the size of the molten pool MP) on the basis of the measurement result of the measuring device 71.

The measuring device 71 may be any type of measuring device as long as the workpiece W (in particular, the molten pool MP) can be measured. For example, the measuring device 71 may be a measuring device capable of optically measuring the workpiece W (in particular, the molten pool MP). The measuring device 71 may be a measuring device capable of measuring the workpiece W (in particular, the molten pool MP) without contact with the workpiece W. An example of a measuring device capable of optically measuring the workpiece W (in particular, the molten pool MP) without making contact with the workpiece W can be an imaging device capable of imaging the workpiece W. In the following description, an example in which the measuring device 71 is an imaging device will be described. In this case, the measuring device 71 generates an image in which the workpiece W is shown by imaging the workpiece W (in particular, an image in which the molten pool MP is shown (an imaging image including the molten pool MP), hereinafter referred to as a "workpiece image IW"). The workpiece image IW is output to the controller 8 as a measurement result (i.e., information about the molten pool MP) of the measuring device 71.

Furthermore, in the chamber space 63IN, there is a possibility that there will be an unnecessary substance including a part unused for molding the molding object BO within the molding material M supplied from the material nozzle 212. Furthermore, in the chamber space 63IN, there is a possibility that there will be an unnecessary substance including a vapor such as a metal (so-called fume) evaporated by radiating the processing light EL. If such an unnecessary substance adheres to the measuring device 71 located in the chamber space 63IN, there is a possibility that the measuring device 71 cannot be able to properly measure the molten pool MP. For this reason, the measuring device 71 may be located in the chamber space 63IN in a state in which it is accommodated in a housing for preventing adhesion of unnecessary substances to the measuring device 71.

The storage device 72 is located in the external space 64OUT different from the chamber space 63IN. The storage device 72 is connected to a controller to be described in detail below. The storage device 72 can store various types of input information (e.g., measured parameters and/or calculated parameters). The storage device 72 stores at least information about the molten pool MP. In the present embodiment, the storage device 72 may store information about the size of the molten pool MP acquired by the measuring device 71 and information about the position of the molten pool MP in association with each other. The storage device 72 may store information about a target size of the molten pool MP in association with the deflection condition of the processing light EL in the Galvano-mirror 2112 and the target irradiation position (the target irradiation area EA). The deflection conditions of the processing light EL include an amplitude of the processing light EL, a deflection speed, an amplitude direction, and the like in addition to a deflection trajectory shape (wobble shape). The storage device 72 may store information about the measurement target area of the molten pool MP in association with the deflection condition of the processing light EL in the Galvano-mirror 2112. The storage device 72 may store information about the measurement target area of the molten pool MP in association with the moving direction of the irradiation position of the processing beam in the first moving device (the stage 31 and the head drive system 22). The storage device 72 may function as a storage device capable of outputting information about the molten pool MP or the like input in advance in accordance with an output signal.

The storage result of the storage device 72 (e.g., information about the molten pool MP) is output to the controller 8. The controller 8 may change a control aspect of the processing system SYS on the basis of a measurement result of the measuring device 71 and an output result from the storage device 72.

The controller 8 controls the operation of the processing system SYS. For example, the controller 8 may control the processing device 2 (e.g., at least one of the processing head 21 and the head drive system 22) included in the processing system SYS. For example, the controller 8 may control the material supply device 1 included in the processing system SYS. For example, the controller 8 may control the light source 4 included in the processing system SYS. As a result, the controller 8 may control at least one of the processing device 2, the material supply device 1, and the light source 4 to form the molding object BO. That is, the controller 8 may control molding with at least one of the processing device 2, the material supply device 1, and the light source 4. The controller 8 may control at least one of the processing device 2, the material supply device 1, and the light source 4 so that the processing device 2 performs desired molding (specifically, to mold the desired molding object BO) using the molding material M supplied from the material supply device 1 and the processing light EL supplied from the light source 4.

The controller 8 may control the operation of the molding system SYS on the basis of the molding condition information (molding parameters) that defines the molding conditions of the molding object by the molding system SYS. The molding condition information may be input to the controller 8 via an input device (not shown) included in the molding system SYS. The input device may include a manipulating device (e.g., at least one of a keyboard, a mouse, and a touch panel) that can be manipulated by the operator of the molding system SYS to input the molding condition information. The input device may include a communication device capable of receiving the molding condition information transmitted by a device outside the molding system SYS. The input device may include a storage medium reading device capable of reading the molding condition information stored in the storage medium that can be externally attached to the molding system SYS.

The controller 8 may include, for example, an arithmetic unit and a storage device. The arithmetic unit may include, for example, at least one of a central processing unit (CPU) and a graphics processing unit (GPU). The storage device may include, for example, a memory. The controller 8 functions as a device that controls the operation of the processing system SYS by executing a computer program by the arithmetic unit. This computer program is a computer program for causing the arithmetic unit to perform (i.e., execute) an operation to be described below to be performed by the controller 8. That is, the computer program is a computer program for causing the controller 8 to function so that the processing system SYS performs the operation to be described below. The computer program to be executed by the arithmetic unit may be stored in a storage device (i.e., a storage medium) included in the controller 8 or may be stored in any storage medium (e.g., a hard disk or a semiconductor memory) that is built into the controller 8 or can be externally attached to the controller 8. Alternatively, the arithmetic unit may download a computer program to be executed from an external device outside of the controller 8 via a network interface.

The controller 8 may control an output aspect of the processing light EL with the irradiation optics 211. The output aspect may include, for example, at least one of an intensity of the processing light EL and an output timing of the processing light EL. When the processing light EL is pulsed light, the output aspect includes, for example, at least one of a light-emitting time of the pulsed light, a light-emitting period of the pulsed light, and a ratio between a light-emitting time length of the pulsed light and a light-emitting period of the pulsed light (a so-called duty ratio). Furthermore, the output aspect of the processing light EL in the irradiation optics 211 is mainly determined by the output aspect of the processing light EL by the light source 4. For this reason, controlling the output aspect of the processing light EL with the irradiation optics 211 may be regarded as equivalent to controlling the output aspect of the processing light EL with the irradiation optics 211. That is, the controller 8 may control the output aspect of the processing light EL with the irradiation optics 211 by controlling the output aspect of the processing light EL with the light source 4. Furthermore, the controller 8 may control a movement aspect of the processing head 21 with the head drive system 22. Furthermore, the controller 8 may control the movement aspect of the stage 31 with the stage drive system 32. The movement aspect may include, for example, at least one of a movement amount, a movement speed, a movement direction, and a movement timing. Furthermore, the controller 8 may control a supply aspect of the molding material M with the material nozzle 212. The supply aspect may include, for example, at least one of a supply amount (in particular, a supply amount per unit time) and a supply timing. Furthermore, the supply aspect of the molding material M in the material nozzle 212 is mainly determined by the supply aspect of the molding material M in the material supply device 1. For this reason, controlling the supply aspect of the molding material M with the material supply device 1 may be regarded as equivalent to controlling the supply aspect of the molding material M with the material nozzle 212. That is, the controller 8 may control the supply aspect of the molding material M with the material nozzle 212 by controlling the supply aspect of the molding material M with the material supply device 1.

In particular, in the present embodiment, the controller 8 may control an operation of the processing system SYS on the basis of a measurement result of the measuring device 71 and a storage result of the storage device 72. For example, the controller 8 may control at least one of the processing device 2, the material supply device 1, and the light source 4 on the basis of the measurement result of the measuring device 71 and the storage result of the storage device 72. Details of the operation for controlling the processing system SYS on the basis of the measurement result of the measuring device 71 and the storage result of the storage device 72 will be described in detail below.

The controller 8 may not be provided inside the processing system SYS. For example, the controller 8 may be provided as a server or the like outside of the processing system SYS. In this case, the controller 8 and the processing system SYS may be connected by a wired and/or wireless network (or a data bus and/or communication line). As the wired network, for example, a network using a serial bus interface represented by at least one of IEEE 1394, RS-232x, RS-422, RS-423, RS-485, and USB may be used. As the wired network, a network using a parallel bus interface may be used. As the wired network, a network using an interface based on Ethernet (registered trademark) represented by at least one of 10BASE-T, 100BASE-TX, and 1000BASE-T may be used. As the wireless network, a network using radio waves may be used. An example of a network using radio waves is a network based on IEEE 802.1x (e.g., at least one of a wireless LAN and Bluetooth (registered trademark)). As the wireless network, a network using infrared rays may be used. As the wireless network, a network using optical communication may be used. In this case, the controller 8 and the processing system SYS may be configured so that various types of information can be transmitted/received via a network. Moreover, the controller 8 may be able to transmit information such as commands and control parameters to the processing system SYS via a network. The processing system SYS may include a receiving device that receives information such as commands and control parameters from the controller 8 via the network. The processing system SYS may include a transmitting device that transmits information such as commands and control parameters to the controller 8 via the network (i.e., an output device that outputs information to the controller 8). Alternatively, while a first controller that performs a part of the process performed by the controller 8 is provided inside of the processing system SYS, a second controller that performs another part of the process performed by the controller 8 may be provided outside of the processing system SYS.

As examples of the storage medium for storing a computer program executed by the controller 8, at least one of optical discs such as CD-ROM, CD-R, CD-RW, a flexible disc, MO, DVD-ROM, DVD-RAM, DVD-R, DVD + R, DVDRW, DVD+RW, and Blu-ray (registered trademark), a magnetic medium such as a magnetic tape, a magnetooptical disc, a semiconductor memory such as a USB memory, and any medium capable of storing other programs may be used. The storage medium may include a device capable of storing a computer program (e.g., a general-purpose device or a dedicated device in which the computer program is implemented in a state in which the computer program can be executed in at least one form of software and firmware). Furthermore, each process or function included in the computer program may be implemented by a logical processing block implemented in the controller 8 when the computer program is executed by the controller 8 (i.e., the computer), may be implemented by hardware such as a predetermined gate array (FPGA or ASIC) included in the controller 8, or may be implemented in a form in which a logical processing block and a partial hardware module that implements some elements of the hardware are mixed.

### (2) Operation of processing system SYS according to present embodiment

Next, the operation of the processing system SYS will be described. As described above, the processing system SYS performs a molding operation (i.e., molding of the molding object BO) for forming the molding object BO by performing an additional process on the workpiece W. Furthermore, in at least a part of a period during which the molding operation is performed, the processing system SYS performs a molten pool information acquisition operation for generating and storing molten pool information SI in which information about the size of the molten pool MP and information about the position of the molten pool MP are associated from the storage device 72. Furthermore, the processing system SYS performs a processing light control operation for controlling a processing operation (e.g., an intensity of the processing light EL, a processing path, or the like) in the current process on the basis of the read and stored information about the size of the molten pool MP. Moreover, before the processing light control operation is performed, the processing system SYS performs a control signal generation operation for generating a control signal for controlling the processing light EL. For this reason, the molding operation, the molten pool information acquisition operation, the processing light control operation, and the control signal generation operation will be described in the following order.

### (2-1) Molding operation

First, a molding operation for molding the molding object BO will be described. As described above, the processing system SYS molds the molding operation by a laser metal deposition method. For this reason, the processing system SYS may mold the molding object BO by performing an existing additional processing operation based on the laser metal deposition method. Hereinafter, an example of an additional processing operation for molding a three-dimensional structure ST, which is an example of a molding object BO, using the laser metal deposition method will be briefly described.

The processing system SYS molds a three-dimensional structure ST on the workpiece W on the basis of three-dimensional model data (e.g., computer aided design (CAD) data) of the three-dimensional structure ST to be molded and the like. As the three-dimensional model data, measurement data of a three-dimensional object measured by at least one of a measuring device (e.g., the measuring device 71) provided in the processing system SYS and a three-dimensional shape measuring device provided separately from the processing system SYS may be used. To mold the three-dimensional structure ST, the processing system SYS molds, for example, a plurality of layered partial structures (hereinafter referred to as "structural layers") SL arranged along the Z-axis direction in order. As described above, the structural layer SL (additionally, an object constituting a part of the structural layer SL molded in the process of molding the structural layer SL) also corresponds to the molding object BO. For example, the processing system SYS sequentially molds a plurality of structural layer SL obtained by slicing the three-dimensional structure ST into rings along the Z-axis direction layer by layer. As a result, a three-dimensional structure ST, which is a laminated structure in which the plurality of structural layers SL are laminated, is molded. Hereinafter, a flow of an operation for molding a three-dimensional structure ST by sequentially molding a plurality of structural layers SL layer by layer will be described.

First, the operation for molding each structural layer SL will be described with reference to FIGS. 4(a) to 4(e). Under the control of the controller 8, the processing system SYS moves at least one of the processing head 21 and the stage 31 so that the target irradiation area EA is set in a desired area on the molding surface MS corresponding to the surface of the workpiece W or the surface of the formed structural layer SL. Subsequently, the processing system SYS radiates the processing light EL from the irradiation optics 211 to the target irradiation area EA. At this time, the focus position (i.e., the light-focusing position) of the processing light EL may coincide with the molding surface MS. Alternatively, in the Z-axis direction, the light-focusing surface may be detached from the molding surface MS. As a result, as shown in FIG. 4(a), a molten pool (i.e., a pool of metals or the like molten by the processing light EL) MP is formed on the molding surface MS irradiated with the processing light EL. Furthermore, as shown in FIG. 4(b), the processing system SYS supplies the molding material M from the material nozzle 212 under the control of the controller 8. As a result, the molding material M is supplied to the molten pool MP. The molding material M supplied to the molten pool MP is molten by the processing light EL radiated to the molten pool MP. Alternatively, the molding material M supplied from the material nozzle 212 may be molten by the processing light EL before reaching the molten pool MP and the molten molding material M may be supplied to the molten pool MP.

Furthermore, the irradiation optics 211 uses the Galvano-mirror 2112 to move the target irradiation area EA in the molding unit area BSA. That is, the irradiation optics 211 scans the molding unit area BSA with the processing light EL using the Galvano-mirror 2112. When the processing light EL is no longer radiated to the molten pool MP as the target irradiation area EA moves, the molding material M molten in the molten pool MP is cooled and solidified. Furthermore, as the target irradiation area EA moves, the molten pool MP also moves. As a result, as shown in FIG. 4(c), a molding object BO composed of the solidified molding material M is deposited on the molding surface MS. Furthermore, the molten pool MP may be formed over almost the entire molding unit area BSA.

During the period when the target irradiation area EA is moving in the molding unit area BSA, the molding system SYS may move at least one of the processing head 21 and the stage 31 so that the molding unit area BSA moves on the molding surface MS. That is, the molding system SYS may perform the movement of the target irradiation area EA in the molding unit area BSA and the movement of the molding unit area BSA on the molding surface MS in parallel.

Alternatively, during the period when the target irradiation area EA is moving in the molding unit area BSA, the molding system SYS may not move the processing head 21 and stage 31 so that the molding unit area BSA does not move on the molding surface MS. In this case, after the additional process (i.e., molding) in the molding unit area BSA is completed, the molding system SYS may move at least one of the processing head 21 and the stage 31 so that the molding unit area BSA is set in another area on the molding surface MS. That is, the molding system SYS may move at least one of the processing head 21 and the stage 31 so that the molding unit area BSA moves on the molding surface MS. In this case, the molding system SYS may move at least one of the processing head 21 and the stage 31 so that the area where the molding unit area BSA has already been set on the molding surface MS (i.e., the area where the additional process has already been performed) is adjacent to an area where the molding unit area BSA is newly set on the molding surface MS (i.e., an area where the additional process is performed from now on). In one example, the molding system SYS may move at least one of the processing head 21 and the stage 31 so that an area where the molding unit area BSA has already been set on the molding surface MS does not overlap the area where the molding unit area BSA is newly set on the molding surface MS. In another example, the molding system SYS may move at least one of the processing head 21 and the stage 31 so that the area where the molding unit area BSA has already been set on the molding surface MS partially overlaps the area where the molding unit area BSA is newly set on the molding surface MS.

The processing system SYS iterates a series of molding processes including forming the molten pool MP by irradiating the processing light EL, supplying the molding material M to the molten pool MP, melting the supplied molding material M, and solidifying the molten molding material M while moving the processing head 21 in at least one of the X-axis direction and Y-axis direction with respect to the molding surface MS, as shown in FIG. 4(d). Typically, the processing system SYS iterates a scan operation for moving the processing head 21 in at least one of the X-axis direction and the Y-axis direction with respect to the molding surface MS while radiating the processing light EL to the molding surface MS at a desired timing and a step operation for moving the processing head 21 in the other of the X-axis direction and the Y-axis direction with respect to the molding surface MS without radiating the processing light EL to the molding surface MS. These operations may be sometimes referred to as wobbles. At this time, while the processing system SYS radiates the processing light EL to an area where the molding object BO is desired to be molded on the molding surface MS during a period in which the scan operation is performed, the processing light EL is not radiated to an area where the molding object BO is not desired to be molded on the molding surface MS. That is, while the target irradiation area EA is moved along a predetermined movement trajectory on the molding surface MS, the processing system SYS radiates the processing light EL to the molding surface MS at a timing corresponding to an aspect of a distribution of an area where the molding object BO is desired to be molded. Typically, the processing system SYS iterates a scan operation for moving the target irradiation area EA in one of the X-axis direction and the Y-axis direction with respect to the molding surface MS while radiating the processing light EL to the target irradiation area EA at a desired timing and a step operation for moving the target irradiation area EA in the other of the X-axis direction and the Y-axis direction with respect to the molding surface MS without radiating the processing light EL to the target irradiation area EA. As a result, the molten pool MP also moves on the molding surface MS along a movement trajectory corresponding to the movement trajectory of the target irradiation area EA. Specifically, the molten pool MP is sequentially formed in a portion irradiated with the processing light EL within an area along the movement trajectory of the target irradiation area EA on the molding surface MS. As a result, as shown in FIG. 4(e), a structural layer SL corresponding to the molding object BO, which is an aggregate of the molding material M solidified after melting, is molded on the molding surface MS. That is, a structural layer SL corresponding to an aggregate of the molding object BO molded on the molding surface MS in a pattern corresponding to the movement trajectory of the molding unit area BSA (i.e., in a plan view, a structural layer SL having a shape corresponding to the movement trajectory of the molding unit area BSA) is molded. Furthermore, when the target irradiation area EA is set in the area where the molding object BO is not desired to be molded, the processing system SYS may radiate the processing light EL to the target irradiation area EA and stop the supply of the molding material M. Moreover, when the target irradiation area EA is set in the area where the molding object BO is not desired to be molded, the processing system SYS may supply the molding material M to the target irradiation area EA and radiate the processing light EL having an intensity that does not allow the formation of the molten pool MP to the target irradiation area EA.

The movement path (in other words, the movement trajectory) of the molding unit area BSA may be referred to as a processing path (in other words, a tool path). The processing path information (processing path parameter) about the processing path may be included in the above-described molding condition information (molding condition parameter). The processing path information may include information (e.g., coordinate information) about a plurality of positions where at least one of the molding unit areas BSA is set sequentially. In this case, each position where at least one of the molding unit areas BSA is set may be referred to as a unit processing path. The controller 8 may move at least one of the processing head 21 and the stage 31 so that the molding unit area BSA moves along the movement path designated by the processing path information. Furthermore, because the additional process (i.e., molding) is performed in the molding unit area BSA, the processing path may be a path along which the processing device 2 performs molding on the molding surface MS.

The molding condition information may include molding size information about the size of the molding unit area BSA. For example, the molding size information may include information about the size of the molding unit area BSA in the X-axis direction. For example, the molding size information may include information about the size of the molding unit area BSA in the Y-axis direction. As described above, when the processing path information includes information about each position (i.e., the unit processing path) where the molding unit area BSA is set, the molding size information may include information about the size of the molding unit area BSA at each position where the molding unit area BSA is set (i.e., a size per unit processing path). As described above, when the molding unit area BSA moves as at least one of the processing head 21 and the stage 31 moves, the size of the molding unit area BSA in the moving direction of the molding unit area BSA may be referred to as a length of the molding unit area BSA. On the other hand, a size of the molding unit area BSA in a direction intersecting the moving direction of the molding unit area BSA may be referred to as a width of the molding unit area BSA. Because molding is performed in the molding unit area BSA, the width of the molding unit area BSA may be referred to as a molding width. Furthermore, because the molding unit area BSA moves along with the movement of at least one of the processing head 21 and the stage 31, the moving direction of the molding unit area BSA may be a moving direction of at least one of the processing head 21 and the stage 31. The moving direction of the molding unit area BSA may be considered to be equivalent to a moving direction of at least one of the head drive system 22 and the stage drive system 32. The controller 8 may control the Galvano-mirror 2112 of the irradiation optics 211 so that the target irradiation area EA moves in the molding unit area BSA having a size designated in the molding size information. Furthermore, because the additional process (i.e., molding) is performed in the molding unit area BSA, the processing path may be a path along which the processing device 2 performs molding on the molding surface MS. Moreover, the molding condition information may include a molding unit area shape related to the shape of the molding unit area BSA.

In addition, software that can input the molding width of one line is known as software that can create a general processing path (tool path). In this case, the controller 8 may acquire information about the input molding width using such software and control the Galvano-mirror 2112 on the basis of the acquired information about the molding width. The controller 8 may acquire information about the molding width input using such software and control the Galvano-mirror 2112 so that the size of each of the molding unit areas BSA (in particular, the size in a direction intersecting the moving direction of the molding unit area BSA) coincides with the molding width on the basis of the acquired information about the molding width. The controller 8 may acquire information about the molding width input using such software and control the Galvano-mirror 2112 so that the size of each of the molding unit areas BSA (in particular, the size in a direction intersecting the moving direction of the molding unit area BSA) coincides with a size determined in accordance with the molding width on the basis of the acquired information about the molding width.

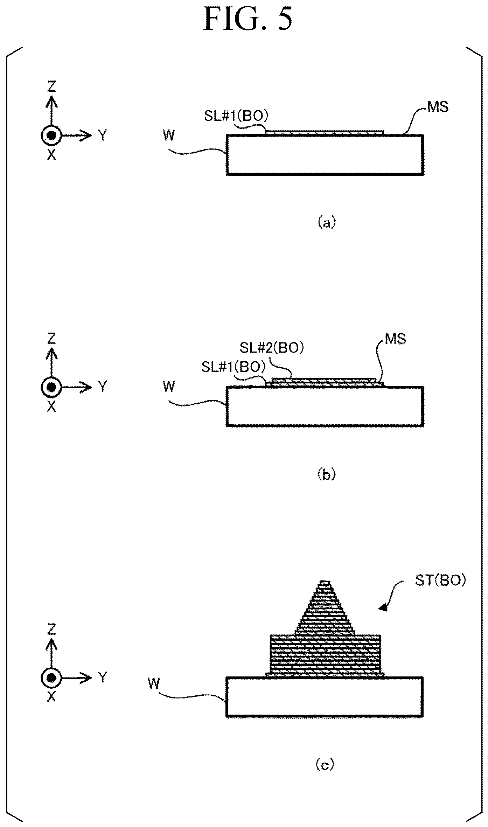

The processing system SYS iteratively performs an operation for molding such a structural layer SL on the basis of the three-dimensional model data under the control of the controller 8. Specifically, first, the controller 8 creates slice data by slicing the three-dimensional model data at a lamination pitch before performing an operation for molding the structural layer SL. The processing system SYS performs an operation for molding the first structural layer SL#1 on the molding surface MS corresponding to the surface of the workpiece W on the basis of the slice data corresponding to the structural layer SL#1. As a result, the structural layer SL#1 is molded on the molding surface MS, for example, as shown in FIG. 5(a). Subsequently, the processing system SYS sets the surface (i.e., the upper surface) of the structural layer SL#1 to a new molding surface MS and then molds a second structural layer SL#2 on the new molding surface MS. To mold the structural layer SL#2, the controller 8 first controls at least one of the head drive system 22 and the stage drive system 32 so that the processing head 21 moves along the Z-axis with respect to the stage 31. Specifically, the controller 8 controls at least one of the head drive system 22 and the stage drive system 32 and moves the processing head 21 toward the +Z side and/or moves the stage 31 toward the -Z side so that the target irradiation area EA is set to the surface of the structural layer SL#1 (i.e., the new molding surface MS). Subsequently, under the control of the controller 8, the processing system SYS molds the structural layer SL#2 on the structural layer SL#1 on the basis of the slice data corresponding to the structural layer SL#2 in an operation similar to an operation for molding the structural layer SL#1. As a result, for example, as shown in FIG. 5(b), the structural layer SL#2 is molded. Subsequently, a similar operation is iterated until all structural layers SL constituting the three-dimensional structure ST to be molded on the workpiece W are molded. As a result, for example, as shown in FIG. 5(c), a three-dimensional structure ST is formed by a laminated structure in which a plurality of structural layers SL are laminated. Furthermore, the plurality of structural layer SL may be integrated with each other when the three-dimensional structure ST is molded (in other words, there may be no boundary between the structural layers SL in the three-dimensional structure).

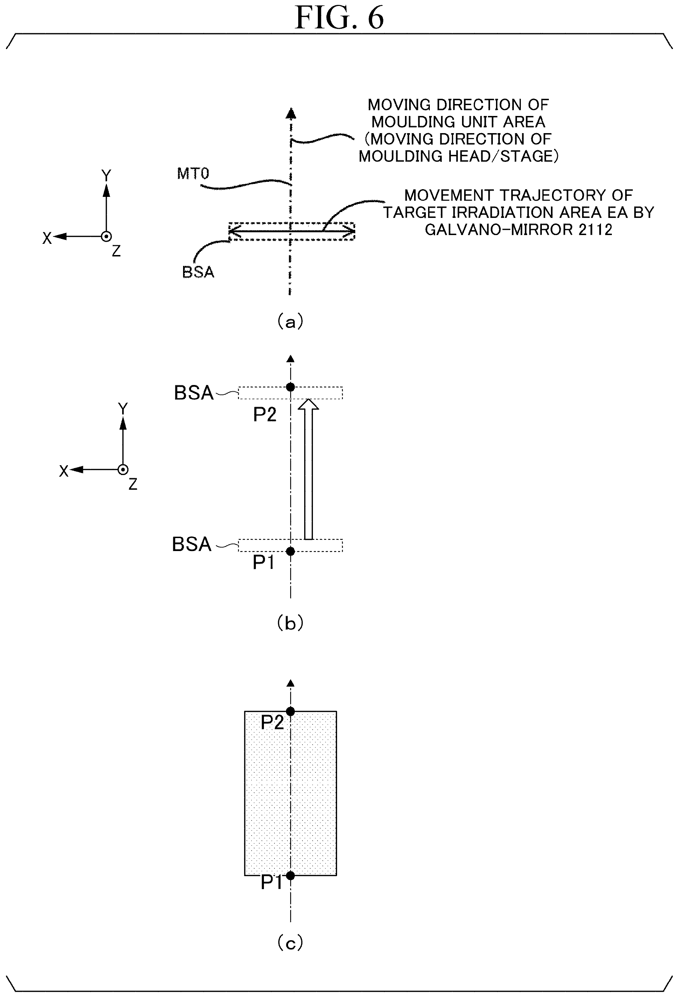

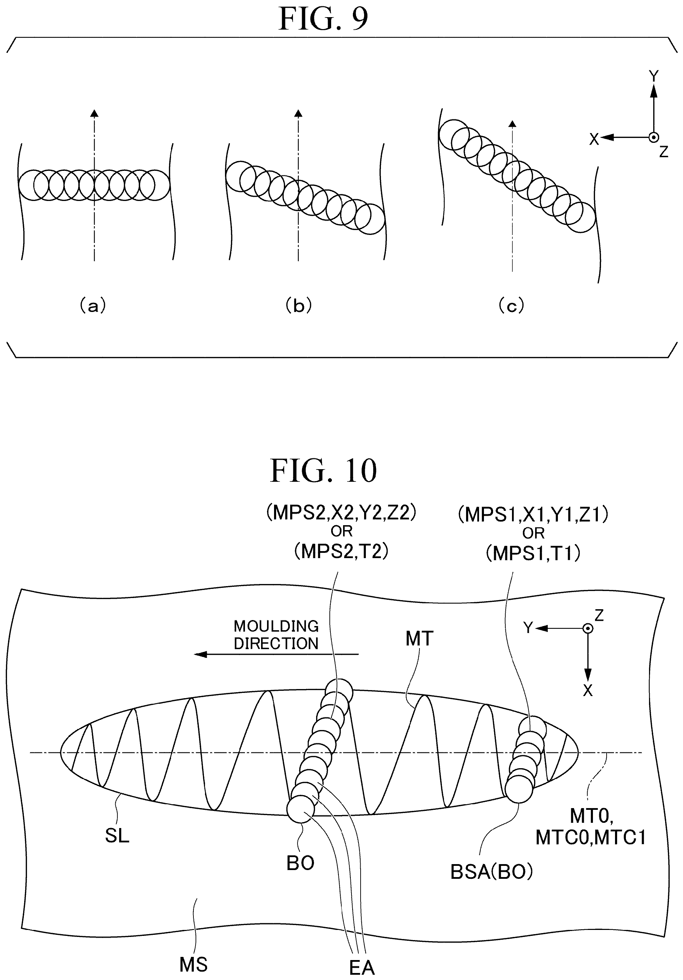

Subsequently, the processing path in the molding of the present embodiment will be described. In the present embodiment, as an example, as shown in FIG. 6(c), FIG. 8(c), FIG. 10, and the like, a case where a structural layer SL having a long shape is molded in the Y-axis direction will be described. FIG. 6(a) is a plan view showing the movement trajectory of the target irradiation area EA in the molding unit area BSA. FIG. 6(b) is a plan view showing an example in which the movement of the target irradiation area EA and the movement of the processing head 21/stage 31 are combined and operated. FIG. 6(c) is a schematic diagram showing an area where the molding object BO is formed when the operation shown in FIG. 6(b) has been performed. When molding is performed, the controller 8, for example, moves at least one of the processing head 21 and the stage 31 so that a movement trajectory MT0 of the molding unit area BSA on the molding surface MS becomes a linear movement trajectory along the Y-axis of the molding surface MS, as shown in FIG. 6(a), FIG. 10, and the like. Moreover, the controller 8 controls the Galvano-mirror 2112 of the irradiation optics 211 so that the target irradiation area EA moves at least in a direction intersecting the moving direction of the molding unit area BSA in the molding unit area BSA. At this time, the width of the molding unit area BSA becomes a bead width. The Galvano-mirror 2112, which functions as deflection optics, can move an irradiation position of the processing light EL onto the molding surface MS on the molding surface MS by deflecting the processing light EL. In other words, the controller 8 may control the Galvano-mirror 2112 so that the target irradiation area EA moves at least in a direction intersecting the movement trajectory MT0 of the molding unit area BSA in the molding unit area BSA. In this case, the shape of the molding unit area BSA may be a rectangular shape in which the moving direction of the target irradiation area EA (i.e., the direction intersecting the movement trajectory MT0) is a longitudinal direction. FIG. 6(a) shows an example in which the molding unit area BSA becomes a rectangular area. In this case, the size in the X-axis direction of the molding unit area BSA (i.e., the moving direction of the molding unit area BSA) may be the same as a spot width of the processing light EL or a size of the moving direction of the molding unit area BSA may be considered to be substantially zero.

Furthermore, as shown in FIG. 6(b), at least one of the processing head 21 and the stage 31 moves, such that the molding unit area BSA moves linearly (in the Y direction in the example shown in FIG. 6(b)). In the example shown in FIG. 6, the molding unit area BSA has the same pattern (period or amplitude). Thus, the Galvano-mirror 2112 and at least one of the processing head 21 and stage 31 move relatively, such that, ideally, i.e., when a speed of the movement of the target irradiation area EA due to the operation of the Galvano-mirror 2112 is sufficiently faster than a speed of movement of at least one of the processing head 21 and the stage 31, a molten pool MP is formed evenly in a rectangular area having a width equal to a width dimension of the molding unit area BSA in the X direction from position P1 to position P2 (molten pools are formed sequentially) as shown in FIG. 6(c). Thereby, the molding object BO can be formed in a rectangular area as shown in FIG. 6(c). At this time, by controlling the speed, the increase/decrease of the speed, and the like, a wave trajectory of the molten pool MP may be formed in the XY plane. The wave trajectory may be a triangular wave, a cosine wave, a sine wave, or the like.

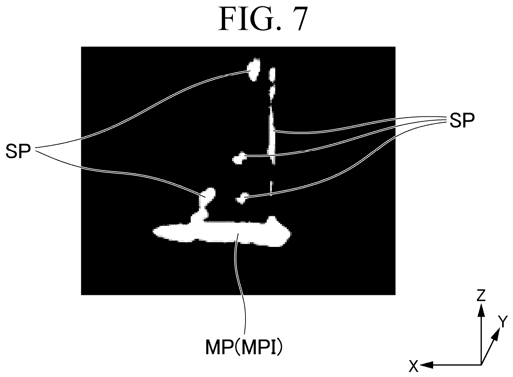

FIG. 7 shows an example of a workpiece image. The width of the molten pool MP in FIG. 7 corresponds to the width (bead width) of the molding unit area BSA in FIG. 6(b). That is, FIG. 7 is a captured image showing a workpiece image when the amplitude operation is performed for the width (bead width) of the molding unit area BSA. In the following description, the amplitude is an amplitude in the X direction. In the processing system SYS, information about the size of the molten pool MP and the like (molten pool information) is acquired using the measuring device 71 from the image as shown in FIG. 7, and a method for acquiring molten pool information using the measuring device 71 will be described below.

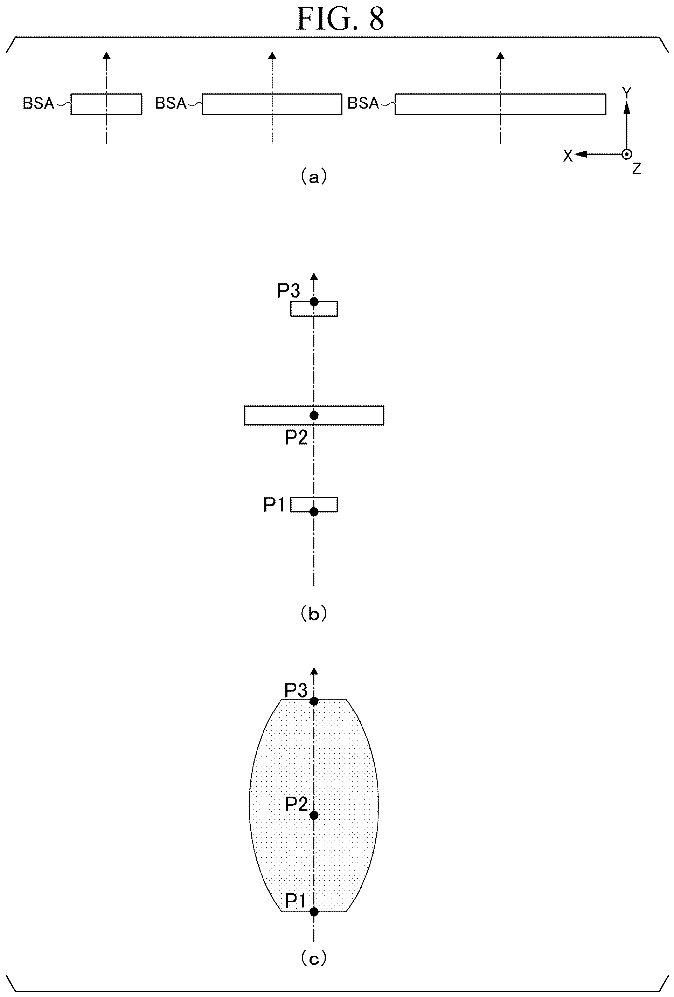

As another example, a processing path for a case where processing is performed while the width of the molding unit area BSA changes in the molding of the present embodiment using the Galvano-mirror 2112 will be described. FIG. 8(a) is a plan view showing the movement trajectory of the target irradiation area EA when the width of the molding unit area BSA in the X direction is changed. Each diagram of FIG. 8(a) shows, for example, the movement trajectory of the target irradiation area EA at a different position in the Y direction. That is, when the processing head 21/stage 31 is moved in the Y direction, a state in which the width in the X direction changes with the passage of time is shown. FIG. 8(b) is a plan view showing an example in which the processing head 21/stage 31 is moved in the Y direction while the width of the molding unit area BSA in the X direction changes. FIG. 8(c) is a schematic diagram showing an area where the molding object BO is formed when the operation shown in FIG. 8(b) has been performed. When the processing head 21/stage 31 is moved in the Y direction while the width changes in the X direction, it may be changed continuously or may be changed in stages as shown in FIG. 8(c). When molding is performed as in FIG. 6, the controller 8 controls the Galvano-mirror 2112 of the irradiation optics 211 so that the target irradiation area EA moves at least in a direction intersecting the moving direction of the molding unit area BSA in the molding unit area BSA as shown in FIG. 8(a). At this time, the width (bead width) of the target irradiation area EA may be changed. That is, it is possible to set and change the width (bead width) of the molding unit area BSA in the X direction. In this case, because the width (bead width) of the target irradiation area EA at each time during molding changes sequentially, the shape of the molding object BO may be a shape other than the rectangular shape shown in FIG. 6.

As shown in FIG. 8(b), at least one of the processing head 21 and the stage 31 moves, such that the molding unit area BSA moves linearly (in the Y direction in the example shown in FIG. 8(b)). In the example shown in FIG. 8, the pattern (amplitude in the example of FIG. 8) of the molding unit area BSA changes sequentially while the target irradiation area EA is moved relatively in the Y direction by at least one of the processing head 21 and the stage 31. As an example, for example, as shown in FIG. 8(b), the bead width may be gradually increased from position P1 to position P2 and the bead width may be gradually reduced from position P2 to position P3. In this case, as shown in FIG. 8(c), ideally (when the moving speed of the target irradiation area EA by the Galvano-mirror 2112 is sufficiently faster than the moving speed of at least one of the processing head 21 and the stage 31), the molten pool MP is formed evenly from position P1 to position P3 (the molten pool MP is formed sequentially). Thereby, as shown in FIG. 8(c), it is possible to form a molding object BO in an area having an arc-shaped side whose width dimension changes smoothly, such as when both ends of the oval shape are cut off. Although an example in which the bead width is continuously changed during molding has been described in FIG. 8, the bead width may be changed in a step shape (in stages).

FIG. 9(a) is a plan view showing the movement trajectory of the target irradiation area EA when the movement speed of the target irradiation area EA is sufficiently fast with respect to the movement speed of the processing head 21/stage 31. In addition, a plurality of circle marks in each drawing of FIG. 9 indicate the target irradiation area EA. Moreover, in each drawing of FIG. 9, the position of the target irradiation area EA changes from right to left (in the X direction) with the passage of time. FIG. 9(b) is a plan view showing the movement trajectory of the target irradiation area EA when the movement speed of the target irradiation area EA is moderately fast with respect to the movement speed of the processing head 21/stage 31. FIG. 9(c) is a plan view showing the movement trajectory of the target irradiation area EA when the movement speed of the target irradiation area EA is slow with respect to the movement speed of the processing head 21/stage 31. Compared to FIG. 9(a), in FIGS. 9(b) and 9(c), the trajectory in one outward path when the Galvano-mirror 2112 performs a back-and-forth movement once in the X direction includes more Y direction components. As described above, because at least one of the processing head 21 and the stage 31 moves while the target irradiation area EA is moving in the molding unit area BSA, when the movement speed of the target irradiation area EA by the Galvano-mirror 2112 is sufficiently faster than the speed at which at least one of the processing head 21 and stage 31 is moved (see FIG. 9(a)), the target irradiation area EA can be considered to be moving in the X direction. On the other hand, when the movement speed of the target irradiation area EA by the Galvano-mirror 2112 approaches the speed at which at least one of the processing head 21 and the stage 31 moves (see FIGS. 9(b) and 9(c)), the trajectory in one outward path while the Galvano-mirror 2112 performs a back-and-forth movement once in the X direction includes more Y direction components. Thus, it is possible to equalize the molten pool MP in the area where the molding object BO is formed by adjusting (setting) a relative movement speed of the target irradiation area EA to the movement speed of at least one of the processing head 21 and the stage 31. For example, it is possible to form a molten pool MP (a molding object BO) of the shape as shown in FIG. 10, which is a schematic diagram showing the irradiation trajectory of the laser light for the molding object BO by moving the target irradiation area EA at a moderate relative speed shown in FIG. 9(b).

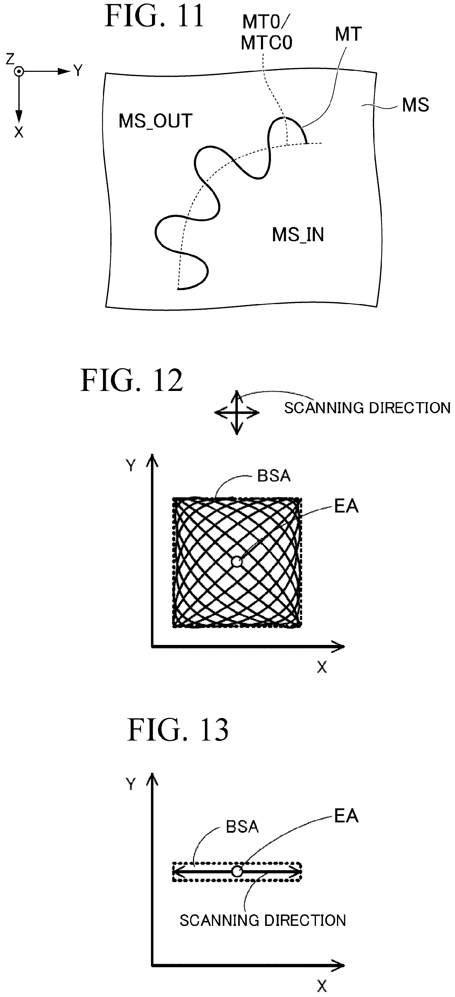

As described above, the controller 8 may move at least one of the processing head 21 and the stage 31 so that the molding unit area BSA moves on the molding surface MS, even during a period when the target irradiation area EA is being moved in the molding unit area BSA using the Galvano-mirror 2112. As a result, due to the movement of the target irradiation area EA in the molding unit area BSA and the movement of the molding unit area BSA itself, the target irradiation area EA moves along the movement trajectory MT shown in FIG. 11 on the molding surface MS. Specifically, the target irradiation area EA moves along the direction intersecting the movement trajectory MT0 while moving along the movement trajectory MT0 of the molding unit area BSA. That is, the target irradiation area EA moves along the movement trajectory MT of a wave shape oscillating around the movement trajectory MT0. In the following description, the shape of the trajectory of the processing light EL deflected and scanned by the Galvano-mirror 2112 described above may be referred to as a wobble shape. The storage device 72 may store this wobble shape. Although a case where the wobble shape is a wave shape has been described in the above-described example, for example, molding may be performed by scanning the processing light EL so that the wobble shape is a circular shape. In addition, a deflection scanning operation of the processing light EL on the molding surface MS by the Galvano-mirror 2112 may be referred to as a wobble.

For example, as shown in FIG. 12, which is a plan view showing an example of the movement trajectory of the target irradiation area EA in the molding unit area BSA, at least a part of the movement trajectory of the target irradiation area EA in the molding unit area BSA may be located between two adjacent partial trajectories constituting the movement trajectory of the target irradiation area EA in the molding unit area BSA. In FIG. 12, the controller 8 iterates an operation for moving the target irradiation area EA back and forth in the X-axis direction a plurality of times while gradually changing the movement trajectory of the target irradiation area EA. As a result, the shape of the molding unit area BSA in which the target irradiation area EA moves as the target irradiation area EA moves back and forth in the X-axis direction a plurality of times may be considered to be equivalent to a rectangular shape as shown in FIG. 12. Thus, the controller 8 can make the shape of the molding unit area BSA as a desired shape by adjusting the movement trajectory of the target irradiation area EA.

Moreover, as shown in FIG. 13, which is a plan view showing another example of the movement trajectory of the target irradiation area EA in the molding unit area BSA, the controller 8 may control the Galvano-mirror 2112 so that the target irradiation area EA moves in a single direction in the molding unit area BSA. In particular, the controller 8 may control the Galvano-mirror 2112 so that the target irradiation area EA moves back and forth at least once in a single direction (in some cases, the target irradiation area EA moves back and forth iteratively) in the molding unit area BSA. In this case, the shape of the molding unit area BSA in which the target irradiation area EA moves may be a rectangular shape in which the moving direction of the target irradiation area EA is in the longitudinal direction. In the example shown in FIG. 13, the target irradiation area EA is iteratively moving back and forth in the X-axis direction. In this case, the shape of the molding unit area BSA may be a rectangular shape in which the X-axis direction is the longitudinal direction.

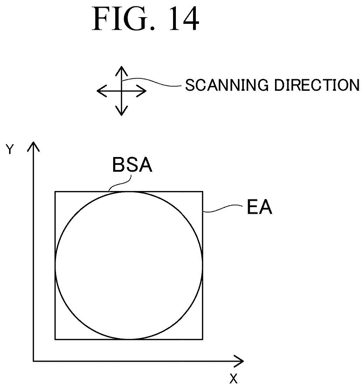

Moreover, as another example, as shown in FIG. 14, which is a plan view showing another example of the movement trajectory of the target irradiation area EA in the molding unit area BSA, the controller 8 may move the target irradiation area EA in a plurality of directions so that the movement trajectory of the target irradiation area EA in the molding unit area BSA becomes a circular movement trajectory. In this case, the controller 8 may control the Galvano-mirror 2112 so that the X coordinate X of the target irradiation area EA at time t is expressed by the equation "X=A×sin(2π×f×t+α)" and the Y coordinate Y of the target irradiation area EA at time t is expressed by the equation "Y=A×cos(2πf×t+α)" in a coordinate system originating from the center of the molding unit area BSA. Furthermore, "f" in the above-described equation denotes the number of back-and-forth movements (i.e., a frequency) of the target irradiation area EA, "A" denotes an amplitude corresponding to half of an amount of back-and-forth movement of the target irradiation area EA, and "α" denotes a phase amount indicating an initial position of the target irradiation area EA in each of the X-axis direction and the Y-axis direction. At least one of f, A, and α may be able to be designated by the operator of the molding system SYS.

The storage device 72 may store a scanning direction and a scanning position of the processing light EL. In this case, for example, changes in a wobble shape, a scanning direction, and a scanning position may be stored in association with a current position of the molding object (which may include a current irradiation position and current position coordinates of the processing light EL) or an elapsed time from the start of molding.

As another example, as shown in FIG. 11 showing the movement trajectory MT0 of the molding unit area BSA on the molding surface MS, the controller 8 moves at least one of the processing head 21 and the stage 31 so that the movement trajectory MT0 of the molding unit area BSA on the molding surface MS becomes a curved movement trajectory along the molding surface MS. Likewise, in this case, the Galvano-mirror 2112 may be controlled so that the target irradiation area EA moves at least in a direction intersecting the moving direction of the molding unit area BSA in the molding unit area BSA. Moreover, the target irradiation area EA may move along a wave-shaped movement trajectory MT that oscillates around the movement trajectory MT0.

Furthermore, the movement trajectory MT0 may be a tool path created by slice software. The amplitude, frequency, pattern, and the like of the movement trajectory MT shown in FIG. 11 may be input by the operator. These may be automatically determined on the basis of molding width information input by the operator.

Furthermore, a movement center MTC1 of the target irradiation area EA may be an amplitude center of the wave-shaped movement trajectory MT of the target irradiation area EA on the molding surface MS. That is, the movement center MTC1 of the target irradiation area EA may be an oscillation center when the movement trajectory MT of the target irradiation area EA on the molding surface MS is assumed to correspond to oscillation.

When the movement center MTC1 moves outward from the movement center MTC0, the controller 8 may shorten the period of the movement trajectory of the processing light EL corresponding to the movement center MTC1 that is outward away from the movement center MTC0 compared to the case where the movement center MTC1 coincides with the movement center MTC0. That is, the controller 8 may shorten the period of the movement trajectory MT of the target irradiation area EA corresponding to the movement center MTC1 separated outward from the movement center MTC0. Furthermore, when the processing light EL periodically moves back and forth in the molding unit area BSA (i.e., the target irradiation area EA periodically moves back and forth), the period of the movement trajectory of the processing light EL (i.e., the period of the movement trajectory MT of the target irradiation area EA) may be considered to be equivalent to the time required for the processing light EL to make one back-and-forth movement (i.e., the time required for the target irradiation area EA to make one back-and-forth movement).

### (2-2) Molten pool information acquisition operation

Subsequently, a molten pool information acquisition operation performed by the processing system SYS during at least a part of the period during which the molding operation is performed will be described with reference to FIGS. 7 and 15 to 20. Furthermore, the processing system SYS typically performs the molten pool information acquisition operation in parallel with the above-described molding operation. The molten pool information acquisition operation is broadly divided into an imaging operation and an image processing operation for performing image processing of the captured workpiece image IW. These will be described in the following order.

### (2-2-1) Imaging operation

The measuring device 71 includes an imaging head 80 (see FIG. 1). The imaging head 80 is arranged at a position away from the optical path of the processing light EL radiated from the processing head 21 (in particular, the irradiation optics 211) to the workpiece W. As a result, even if the imaging head 80 is mounted on the processing head 21, the processing light EL is not shielded by the imaging head 80. That is, even if the imaging head 80 is mounted on the processing head 21, the processing light EL is appropriately radiated to the workpiece W. Moreover, the imaging head 80 is located at a position away from the supply path of the molding material M supplied from the processing head 21 (in particular, the material nozzle 212) to the workpiece W. As a result, even if the imaging head 80 is attached to the processing head 21, the molding material M is not blocked by the imaging head 80. That is, even if the imaging head 80 is attached to the processing head 21, the molding material M is appropriately supplied to the workpiece W. The imaging head 80 may be attached to the processing head 21 at any position. Furthermore, the optical path of the imaging head 80 (the measuring device 71) may partially overlap the optical path of the processing light EL and may partially overlap the supply path of the molding material M.

Furthermore, in the present embodiment, the state in which "the imaging head 80 is attached to the processing head 21" may include a state in which "the imaging head 80 is aligned with the processing head 21 so that the imaging head 80 is in physical contact with the processing head 21." The state in which "the imaging head 80 is attached to the processing head 21" may include a state in which "the imaging head 80 is aligned with the processing head 21 so that the imaging head 80 is not in physical contact with the processing head 21." The same is true for the state in which the controller 8 is attached to the processing system SYS.

The imaging head 80 is used to image the molten pool MP formed in the workpiece W. Here, when the imaging head 80 is attached to the processing head 21 as described above, in the state in which the imaging head 80 is attached to the processing head 21, the imaging head 80 and the processing head 21 are aligned with each other so that the imaging range of the imaging head 80 includes at least a part of the workpiece W (in particular, at least a part of the molten pool MP formed in the workpiece W). In this case, because the imaging head 80 moves with the processing head 21, even if the head drive system 22 moves the processing head 21, the imaging range of the imaging head 80 includes at least a part of the molten pool MP formed in the workpiece W. That is, the imaging range of the imaging head 80 can substantially follow at least a portion of the molten pool MP to be captured by the imaging head 80. To image at least a part of the molten pool MP, the imaging head 80 may separately include an imaging device, a mirror, a housing, and the like. Furthermore, the imaging range may include a molding shot area, a molding unit area BSA, and the like.

The imaging head 80 is a camera capable of imaging the molten pool MP. Specifically, the imaging head 80 includes an imaging element that receives light from at least a part of the molten pool MP. In the following description, the light from at least a part of the workpiece W is referred to as "workpiece light WL." The imaging head 80 images at least a part of the workpiece W (in particular, at least a part of the molten pool MP) by receiving (i.e., detecting) the workpiece light WL using the imaging element. As a result, the measuring device 71 generates a workpiece image WI in which the molten pool MP is shown.

The imaging head 80 images at least a part of the workpiece W (in particular, at least a part of the molten pool MP). For this reason, as shown in FIG. 7 showing an example of the workpiece image WI, at least a part of the workpiece W (in particular, at least a part of the molten pool MP) is shown in the workpiece image WI. Here, the intensity of the workpiece light WL from the portion of the workpiece W in which the molten pool MP is formed is typically higher than the intensity of the workpiece light WL from the portion of the workpiece W in which the molten pool MP is not formed. For this reason, the difference in the intensity of the workpiece light WL, for example, appears as a luminance difference (typically a gradation difference) on the workpiece image WI. For this reason, the controller 8 can relatively easily identify a portion of the workpiece image WI in which the molten pool MP is shown (the molten pool MPI on the image) on the basis of the luminance (gradation) of the workpiece image WI.

For example, the controller 8 may identify an image portion of the workpiece image WI having luminance greater than a predetermined threshold as a portion of the workpiece image WI in which the molten pool MP is shown. Thereafter, the controller 8 calculates it as information about the size of the molten pool MP on the basis of an image size (e.g., the number of pixels) of the portion of the workpiece image WI in which the molten pool MP is shown. Furthermore, the size of the molten pool MP actually formed on the workpiece and the measurement result may not necessarily be the same. In this case, by applying appropriate corrections, the measurement result (i.e., the molten pool MPI on the image) may coincide with the actual molten pool MP.

As the size of the molten pool MP, the number of pixels constituting the workpiece image WI (or a value determined in accordance with the number of pixels (e.g., a value proportional to the number of pixels), wherein the same is true hereinafter) may be used. For example, as described above, when the size in a predetermined direction of the molten pool MP is used as information about the size of the molten pool MP, the luminance of the workpiece image WI is greater than a predetermined threshold and the number of pixels arranged in a predetermined direction may be used as information about the size of the molten pool MP. As described above, when the area of the molten pool MP is used as the size of the molten pool MP, the number of pixels in the workpiece image WI having luminance greater than a predetermined threshold may be used as information about the size of the molten pool MP.

Furthermore, when the workpiece image WI is a color image, information about the size of the molten pool MP may be measured using a color difference. Moreover, when the workpiece image WI is a color temperature image, information about the size of the molten pool MP may be measured using a color temperature difference.

Furthermore, as described above, the workpiece W is irradiated with the processing light EL. For this reason, there is a possibility that the processing light EL via the workpiece W (e.g., the processing light EL reflected by the workpiece W) will be input to the imaging element of the imaging head 80. Here, the intensity of the processing light EL is set to an intensity at which the workpiece W can be molten. For this reason, if the processing light EL via the workpiece W is input to the imaging element of the imaging head 80, there is a possibility that the imaging element will fail due to the processing light EL. For this reason, the imaging head 80 may be configured to prevent the processing light EL from the workpiece W from being input to the imaging element. For example, the imaging head 80 may include an optical element that prevents the processing light EL from the workpiece W from being input to the imaging element. An example of such an optical element can be a filter in which the transmittance for the processing light EL is relatively low, but the transmittance for the workpiece light WL is relatively high. An example of such an optical element can be a filter in which an absorption rate for the processing light EL is relatively high, but an absorption rate for the workpiece light WL is relatively low.

The imaging head 80 may further include a cooling device for cooling the imaging head 80, a removal mechanism for preventing and removing adhesion of unnecessary substances, and the like.

The controller 8 controls the operation of the processing system SYS on the basis of the workpiece image WI generated by the measuring device 71. For example, the controller 8 may generate characteristic information about the characteristics of the molten pool MP on the basis of the workpiece image WI and control the operation of the processing system SYS on the basis of the characteristic information. In this case, the controller 8 may function as a characteristic information generation device capable of generating the characteristic information.

Specifically, the controller 8 may measure the size of the molten pool MP shown in the workpiece image WI and control the operation of the processing system SYS on the basis of the measurement result and the target size of the molten pool MP formed by the processing system SYS. In this case, the measured size of the molten pool MP may be set to a target size. Alternatively, a target size of the molten pool MP may be set on the basis of the deflection condition of the Galvano-mirror 2112, which is a condition for deflecting the processing light EL. The target size of the molten pool MP may be changed every time the deflection condition changes. Subsequently, the controller 8 may set the target intensity of the processing light EL generated by the light source 4 on the basis of the set size of the molten pool MP. In this case, the controller 8 may set an intensity other than the target intensity of the processing light EL generated by the light source 4.

For example, when the size of the calculated molten pool MP is smaller than the target size (i.e., the size of the molten pool MP already stored in the storage device 72), the controller 8 may set a new target intensity larger than the target intensity of the processing light EL. In this case, because the intensity of the processing light EL radiated to the workpiece W increases compared to before the new target intensity is set, the amount of molding material M to be molten increases. As a result, the measured size of the molten pool MP increases toward the target size compared to before the new target intensity is set.

For example, if the calculated size of the molten pool MP is larger than the target size, the controller 8 may newly set a target intensity smaller than the reference value of the target intensity. In this case, the amount of molding material M to be molten is reduced because the intensity of the processing light EL radiated to the workpiece W is reduced compared to before the new target intensity is set. As a result, the size of the molten pool MP decreases toward the target size compared to before the new target intensity is set.

For example, if the calculated size of the molten pool MP coincides with the target size, the target intensity may be maintained at a reference value as it is. That is, the controller 8 may continue to set the reference value for the target intensity as the target intensity as it is. In this case, because the intensity of the processing light EL radiated to the workpiece W is maintained, the amount of the molding material M to be molten does not change. As a result, the size of the molten pool MP coinciding with the target size is maintained.

The controller 8 may change the target size of the molten pool MP on the basis of information about the target size of the molten pool MP associated with the deflection condition of the processing light EL in the Galvano-mirror 2112 stored in the storage device 72. Moreover, the controller 8 may store the target size of the corresponding molten pool MP for each wobble shape of the processing light EL in the Galvano-mirror 2112 stored by the storage device 72. In this case, the target size of the molten pool MP may be changed according to a change in the wobble shape. Moreover, the controller 8 may store the target size of the corresponding molten pool MP for each scanning direction or scanning position of the processing light EL stored by the storage device 72. In this case, the target size of the molten pool MP may be changed in accordance with a change in the scanning direction or scanning position of the processing light EL.

The controller 8 may determine a variation in at least one of the wobble shape of the processing light EL, the scanning direction of the processing light EL, and the scanning position of the processing light EL on the basis of information stored in the storage device 72 and processing information of the molding object during molding with reference to the information stored in the storage device 72 (including information about the size of the molten pool MP, polarization information of the processing light EL, position information, and the like). Determining the variation includes calculating an information difference between the information stored in the storage device 72 and the processing information of the molding object during molding and comparing a magnitude of the calculated difference with a threshold. The threshold may be set by the user in advance or may be automatically generated on the basis of, for example, a learning model on which machine learning has been performed. When these variations exceed the threshold, the controller 8 may update the target size of the molten pool MP. In this case, the determination of the variation in at least one of the wobble shape of the processing light EL, the scanning direction of the processing light EL, and the scanning position of the processing light EL may be automatically performed by the controller 8. That is, the controller 8 automatically determines the variation in at least one of the wobble shape of the processing light EL, the scanning direction of the processing light EL, and the scanning position of the processing light EL on the basis of the information stored in the storage device 72 and the processing information of the molding object during molding and update the target size of the molten pool MP on the basis of the determined variation.

### (2-2-2) Image processing operation

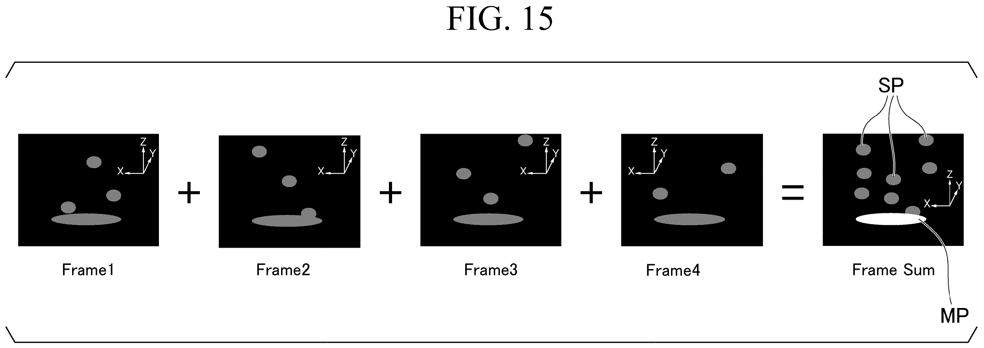

In measuring the size of the molten pool MP, an operation for performing image processing on the workpiece image WI captured by the imaging head 80 will be described in detail. As shown in FIG. 7 showing an example of the workpiece image WI, a plurality of spatters SP generated by a turning operation of the Galvano-mirror 2112 are shown in the captured workpiece image WI in addition to the molten pool MP that is an imaging target. This spatter SP is observed when the laser is radiated to the flying powder before reaching the molten pool MP and the flying powder is molten to emit light or the molten metal jumping from the molten pool MP is formed at a location other than the molding surface. For example, when a powder or laser is radiated in the downward Z direction, the spatter SP is observed in the upward Z direction of the molten pool MP. The shape of the molten pool MP, the shape of the spatter SP, and the like change from time to time according to a processing condition. Because the information of the spatter SP is not required for measuring the size of the molten pool MP, the controller 8 performs image processing to detect only the molten pool MP from the captured workpiece image WI. In the present embodiment, a plurality of workpiece images WI captured at different timings (i.e., different shutter frames of the camera) are added together and image processing in which a portion in which the luminance is displayed higher than a predetermined threshold is a molten pool MP is performed. Specifically, in the example shown in FIG. 15, four workpiece images WI (Frames 1 to 4) that are continuously captured may be added in a state in which processing conditions (layers of the molding object, characteristics of the processing light EL, a scanning direction, and the like) are the same as or close to each other. In this case, Frames 1 to 4 may be, for example, consecutive frames taken during a very short time, or a workpiece image WI in non-consecutive frames may be used. The number of workpiece images WI to be added is not limited to four. Thereafter, the luminance of an added image (Frame Sum in FIG. 15) is measured and an area where the luminance of the image exceeds a predetermined threshold may be determined to be the molten pool MP. The controller 8 may measure the size of the molten pool MP by measuring the number of pixels in the high luminance area, i.e., the area determined to be the molten pool MP in an image sum.

Furthermore, "adding" may be to add signal values at the same position in different frames. Moreover, "addition" may indicate an "additive average." In this case, values obtained by dividing the pixel value of each frame by the number of frames may be added (rounded up or down as appropriate) or a value obtained by adding the pixel values of the frames may be divided by the number of frames (rounded up or down as appropriate). In the case of 10 frames, 1/10 pixel values may be added or a sum of the pixel values may be divided by 10. The molten pool MP may be obtained by the moving average. For example, in the case where 10 frames are added, instead of obtaining a first frame sum by adding frames 1 to 10 and obtaining a second frame sum by adding frames 11 to 20, after sequential frames are buffered, a first frame sum may be obtained by adding frames 1 to 10, a second frame sum may be obtained by adding frames 2 to 11, and a third frame sum may be obtained by adding frames 3 to 12.

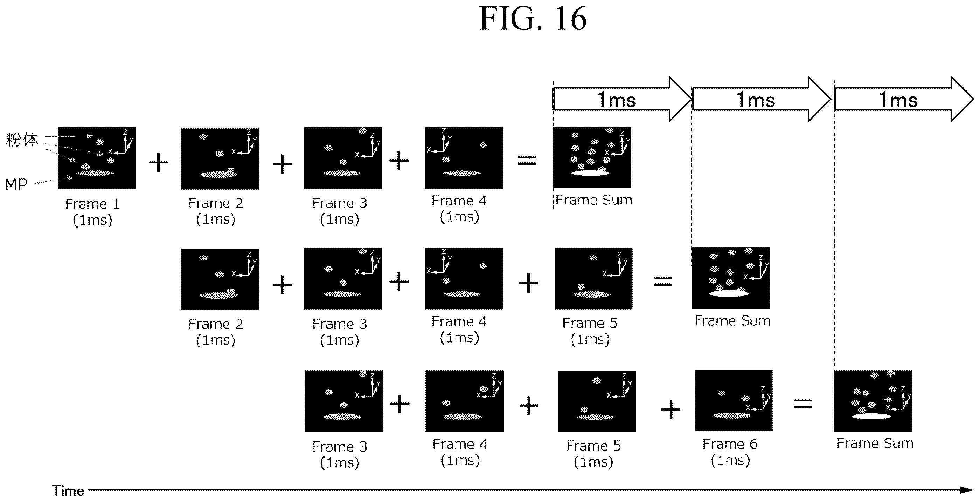

Furthermore, for example, as shown in FIG. 16, which is an explanatory diagram showing an example of a method for detecting a molten pool MP (MPI) from the workpiece image WI, the addition may be performed so that a frame rate does not change at the time of addition. For example, in the case where 10 frames are added at 60 fps, a sum value of frames 1 to 10 may be obtained as first data (see the upper part of FIG. 16), a sum value of frames 2 to 11 may be obtained as second data (see the middle part of FIG. 16), a sum value of frames 3 to 12 may be obtained as third data (see the lower part of FIG. 16), and the like. In this case, because an interval between the first data and the second data is 1/60 sec and an interval between the second data and the third data is also 1/60 sec, the frame rate does not change.

Furthermore, as an image processing method for detecting only the molten pool MP from the captured workpiece image WI, for example, image processing for detecting only the molten pool MP may be performed by performing a process of removing the spatter SP from the captured workpiece image WI.

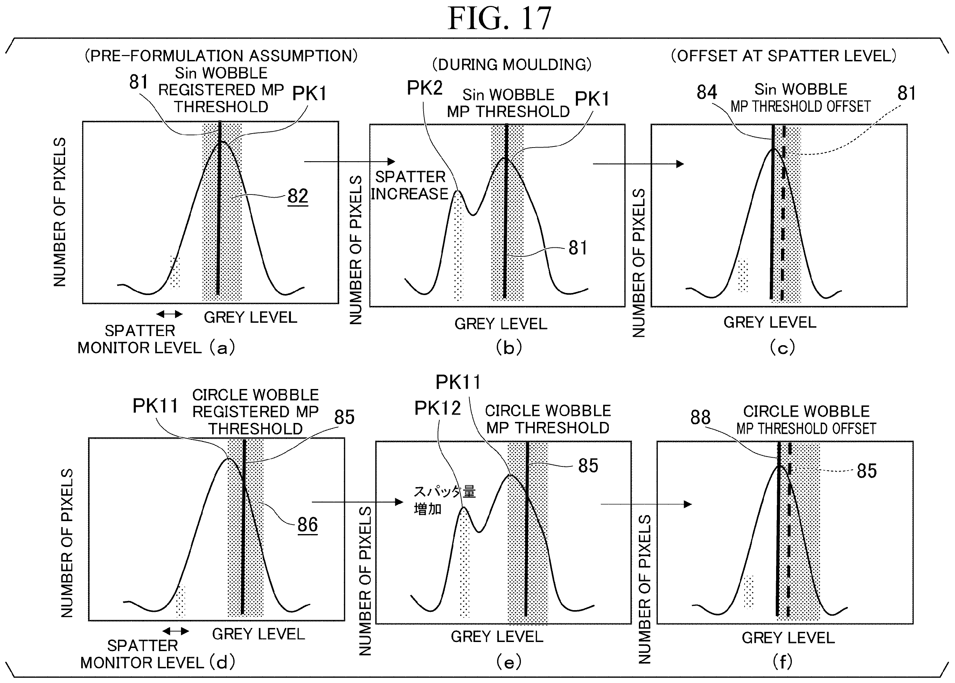

Furthermore, more precise processing control may be performed by effectively using information removed in the above-described image processing method (information about the spatter SP in the image sum). FIGS. 17(a) to 17(c) show an image processing method in which a plurality of integral thresholds for the image sum (Frame Sum in FIG. 15) (i.e., a luminance threshold at the time of image addition) are provided in the present embodiment in which the wobble shape is a wave shape. In each of FIGS. 17(a) to 17(c), the horizontal axis of the graph indicates a gray level of the image. The gray level is lower toward the left (closer to black) and higher toward the right (closer to white). The vertical axis represents the number of pixels at the corresponding gray level. FIG. 17(a) shows a relationship between the gray level and the number of pixels before molding, FIG. 17(b) shows a relationship between the gray level and the number of pixels during molding, and FIG. 17(c) shows a relationship between the gray level and the number of pixels after the integral threshold of the molten pool MP is offset. First, as shown in FIG. 17(a), the integral threshold 81 of the molten pool when the wobble shape is set to a wave shape may be set in advance. In this case, image processing (a feedback process) may be performed so that a peak PK1 of the number of pixels at the time of molding coincides with a set integral threshold 81. At this time, an integral threshold range in which molding is possible (hereinafter referred to as a moldable range 82) may be set on both sides of the integral threshold 81. Although the moldable range 82 is set on both sides of the integral threshold 81 in the present embodiment, the moldable range 82 may be set only on the side of the integral threshold 81. A magnitude of the moldable range 82 may be different between one side and the other side of the integral threshold 81.

When molding is started, as shown in FIG. 17(b), a second peak PK2 appears due to an increase in the number of spatters SP in an area where the gray level is less than the integral threshold 81. From this, it can be seen that the intensity of the processing light EL is so high that spatter occurs in the molding under the processing conditions shown in FIG. 17(b). Therefore, in this case, as shown in FIG. 17(c), a new offset integral threshold 84 may be reset on a low gray level side with respect to an initially set integral threshold 81 and in the moldable range 82. In this case, the peak PK1 overall transitions to the lower gray level side according to the new offset integral threshold 84. Thereby, the influence of the spatter SP can be kept low and only the molten pool MP can be detected. Furthermore, in this case, generation information of the spatter SP may be FB as a processing condition. For example, the controller 8 may make a change to a processing condition in which the spatter SP is less generated.

As another example, FIGS. 17(d) to 17(f) show an image processing method when the wobble shape is a circular shape. The basic image processing method is similar to image processing for a case where the wobble shape shown in FIGS. 17(a) to 17(c) is a wave shape. FIG. 17(d) shows a relationship between the gray level and the number of pixels before molding, FIG. 17(e) shows a relationship between the gray level and the number of pixels during molding, and FIG. 17(f) shows a relationship between the gray level and the number of pixels after the integral threshold of the molten pool MP is offset. As shown in FIG. 17(d), in this case, image processing (a feedback process) may be performed so that a peak PK11 may coincide with a side whose gray level is less than a predetermined integral threshold 85 by a predetermined value. Moreover, at this time, an integral threshold range in which molding is possible (hereinafter referred to as a moldable range 86) may be set on both sides of the integral threshold 85. The moldable range 86 may be provided only on the side of the integral threshold 85. A magnitude of the moldable range 86 may be different between one side and the other side of the integral threshold 85.

When molding is started, as shown in FIG. 17(e), a second peak PK12 appears due to an increase in the number of spatters SP in an area where the gray level is lower than the integral threshold 85. From this, it can be seen that the intensity of the processing light EL is so high that spatter occurs in the molding under the processing conditions shown in FIG. 17(e). Therefore, in this case, as shown in FIG. 17(f), a new offset integral threshold 88 may be reset on a low gray level side with respect to an initially set integral threshold 85 and in the moldable range 86. In this case, the peak PK11 overall transitions to the lower gray level side according to the new offset integral threshold 88. Thereby, the influence of the spatter SP may be kept low and only the molten pool MP may be detected.

Furthermore, a process for speeding up image processing may also be performed. The controller 8 may control processing (molding) by the processing system SYS on the basis of a measurement result of the measuring device 71 and change the measurement target area 100 of the molten pool MP in the measuring device 71 on the basis of a deflection condition that is a condition for deflecting the processing light EL. The controller 8 may measure the size of the molten pool MP on the basis of image information of the molten pool MP located in the measurement target area 100.

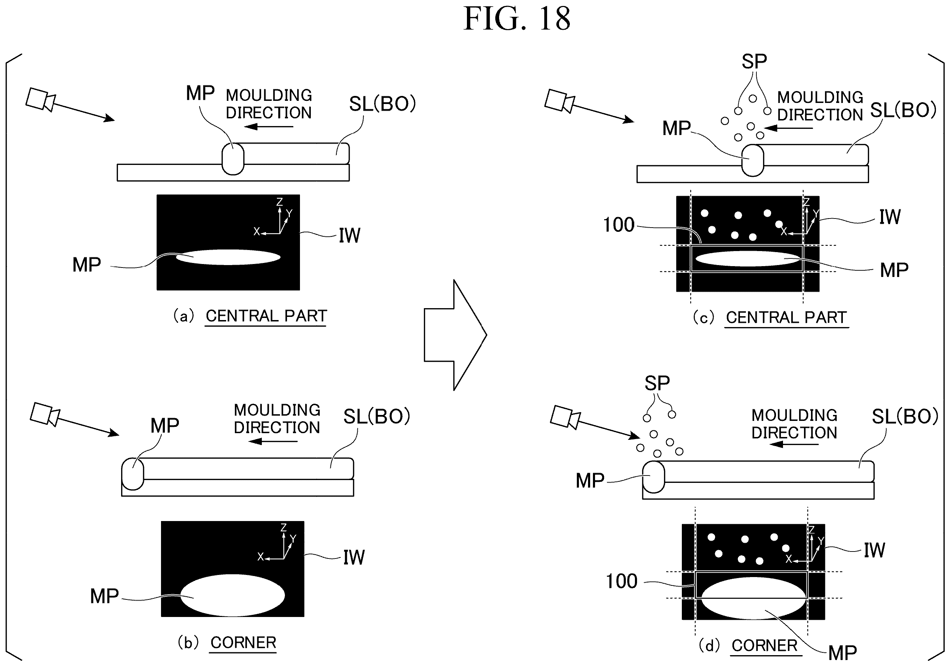

FIGS. 18(a) and 18(b) show workpiece images in the prior art. In FIGS. 18(a) and 18(b), a case where the molten pool MP is imaged from an oblique angle with respect to the molding object will be described as an example. Specifically, when the molding direction is a first direction, the imaging head 80 (the camera) may image the molten pool MP in a second direction that is an opposite direction to the first direction. That is, the molten pool MP may be imaged from an oblique direction opposite to a molding direction. FIG. 18(a) shows a workpiece image IW at a center of a series of processing paths in the first direction (the middle part of the straight line) and FIG. 18(b) shows a workpiece image IW at a corner of a series of processing paths in the first direction (the last part of the straight line). When imaging has been performed from an oblique direction in this way, the size and shape of the molten pool MP captured according to the molding position change. Specifically, in a central part shown in FIG. 18(a), the lower part of the processing light EL is covered with a lower molded layer, so that the size of the molten pool MP is captured to be relatively small. On the other hand, in a corner part shown in FIG. 18(b), imaging is performed so that the size of the molten pool MP is larger than that of the central part because the lower part is open. That is, the size of the molten pool MP (the number of pixels thereof) is greatly measured due to the influence of the depth direction of the molten pool MP.

Therefore, as shown in FIG. 18(c) and FIG. 18(d), in the present embodiment, the measurement target area 100 may be set as a part of the workpiece image IW. The measurement target area 100, for example, may be set by performing a binary conversion process from the image captured in the central part of the molding direction shown in FIG. 18(c) and detecting upper, lower, left, and right ends of the molten pool MP. Specifically, a first line laterally extending on the workpiece image IW may be set on the basis of a point serving as the detected upper end of the molten pool MP. Likewise, the measurement target area 100 having a rectangular shape may be set by setting a second line laterally extending on the workpiece image IW on the basis of a point serving as the lower end of the molten pool MP, setting a third line vertically extending on the workpiece image IW on the basis of a point serving as the left end of the molten pool MP, and setting a fourth line vertically extending on the workpiece image IW on the basis of a point serving as the right end of the molten pool MP. Furthermore, the shape of the measurement target area 100 is not limited to the rectangular shape and may be set to any shape such as an ellipse shape or a diamond shape.

The measurement target area 100 may be set so that it is slightly larger than the molten pool MP. For example, after the upper, lower, left, and right ends of the molten pool MP are detected according to the above-described binarization process, the central position of the measurement target area 100 may be further determined. The measurement target area 100 may be expanded in a state in which the vertical and horizontal aspect ratios centered on the central position of the measurement target area 100 are maintained.

The controller 8 may designate only the molten pool MP located inside the measurement target area 100 within the workpiece image IW as a measurement target. In other words, the information of the image located outside the measurement target area 100 in the workpiece image IW may not be used for measurement. Thereby, the spatter SP or the like outside the measurement target area 100 may be removed. The controller 8 may measure the size of the molten pool MP during molding by measuring the number of pixels of the molten pool MP located in the measurement target area 100. Furthermore, the controller 8 may apply the measurement target area 100 set in the central part at the corner part. That is, as shown in FIG. 18(d), in the workpiece image IW obtained by imaging the corner part, only the molten pool MP located in the measurement target area 100 may be designated as the measurement target. In this case, a part of the imaged molten pool MP (strictly speaking, an area exceeding a predetermined luminance threshold in the image sum) may be likely to deviate from the measurement target area 100. The controller 8 may determine that the area located in the measurement target area 100 and exceeding the predetermined luminance threshold in the image sum is the molten pool MP. For example, as shown in FIG. 18(d), in the measurement target area 100, the upper, left, and right ends of the molten pool MP are detected by detecting a boundary portion between the area exceeding the predetermined luminance threshold and the area not exceeding the luminance threshold. However, when the lower end of the molten pool MP is not detected (when it is located below measurement target area 100), the lower horizontal line (second line) of the measurement target area 100 may be used as the lower end of the molten pool MP. In this case, a longitudinal magnitude of the molten pool MP in the workpiece image IW may coincide with a separation dimension between the detected upper end of the molten pool MP and the second line of the measurement target area 100. Furthermore, as another example, after the upper, lower, left, and right ends of the molten pool MP (or the outer edge shape of the molten pool MP) are detected by performing the comparison with the luminance threshold, the size of the molten pool MP may be measured by updating a portion located outside the measurement target area 100 so that it coincides with an outer edge of the measurement target area 100.

The controller 8 may set the measurement target area 100 or update the measurement target area 100 every time the processing condition changes. The controller 8 may change the measurement target area 100 of the molten pool MP on the basis of information about the measurement target area 100 of the molten pool MP associated with the deflection condition stored in the storage device 72. In this case, the deflection condition may include a wobble shape of the processing light EL. In this case, the controller 8 may set the measurement target area 100 for each wobble shape of the processing light EL. The controller 8 may set a corresponding measurement target area 100 for each scanning direction of the processing light EL. The controller 8 may set a corresponding measurement target area 100 for each scanning position of the processing light EL. The controller 8 may be configured to determine a variation in at least one of the wobble shape of the processing light EL, the scanning direction of the processing light EL, and the scanning position of the processing light EL on the basis of the processing information of the molding object BO and update the setting of the measurement target area 100 when the determined variation exceeds a predetermined threshold. In this case, the controller 8 may automatically determine the variation in at least one of the wobble shape of the processing light EL, the scanning direction of the processing light EL, and the scanning position of the processing light EL. In the case of the automatic determination, the above-described variation may be automatically determined from the workpiece image IW on the basis of a learning model for which machine learning has been performed. On the basis of a measurement result of the measuring device 71, the user may manually set the measurement target area 100. Moreover, a change in the measurement target area 100 of the molten pool MP by the measuring device 71 may include a change in the measurement target area 100 of the image processing related to the molten pool MP. That is, the present invention is not limited to a case where the size of the molten pool MP is measured and an area where image processing is performed when other image processing (e.g., spatter removal or the like) or feedback is performed may be limited to the measurement target area 100.

As the size of the molten pool MP to be measured, a larger size between a size of the molten pool MP in a predetermined direction (e.g., any one of the X-axis direction, the Y-axis direction, and the Z-axis direction) and a size of the molten pool MP in the direction intersecting (typically perpendicular to) the predetermined direction may be used. As the size of the molten pool MP, a smaller size between the size of the molten pool MP in the predetermined direction and the size of the molten pool MP in the direction intersecting (typically perpendicular to) the predetermined direction may be used. As the size of the molten pool MP, an average value between the size of the molten pool MP in the predetermined direction and the size of the molten pool MP in the direction intersecting (typically perpendicular to) the predetermined direction may be used. An area of the molten pool MP may be used as the size of the molten pool MP.

### (2-3) Processing light control operation

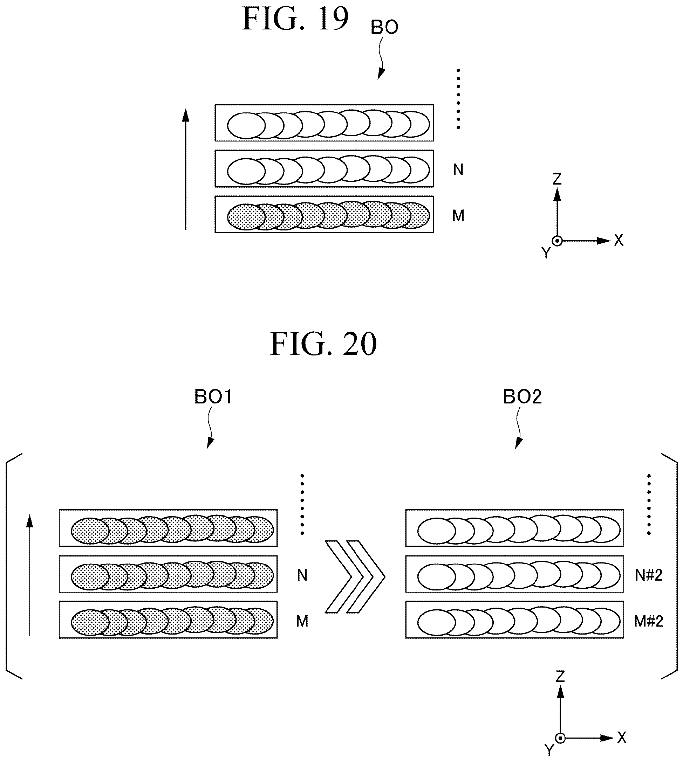

Next, a processing light control operation performed by the processing system SYS for at least a part of the period during which the molding operation is performed will be described with reference to FIGS. 19 and 20. FIG. 19 is an enlarged view showing layers M and N in one molding object BO. FIG. 20 is an enlarged view showing layers M and N in a first molding object BO1 and layers M#2 and N#2 in a second molding object BO2. Furthermore, the processing system SYS typically performs a processing light control operation in parallel with the above-described molding operation. In the present embodiment, as an example, an example in which the controller 8 calculates information about the size of the molten pool MP on the basis of the workpiece image WI (i.e., generates characteristic information about the size of the molten pool MP), stores information about the size of the calculated molten pool MP in the storage device, and controls the operation of the processing system SYS so that the condition that the size of the molten pool MP formed by radiating the processing light EL coincides with the size of the molten pool read from the storage device (i.e., the size of the molten pool MP coincides with the target size) is satisfied will be described. However, the controller 8 may control any device of the processing system SYS (e.g., at least one of the material supply device 1, the processing device 2, the stage device, and the gas supply device 5) so that any condition is satisfied on the basis of the workpiece image WI.

First, the controller 8 sets a target size of the molten pool MP. This is because the processing light control operation is an operation for controlling the processing light EL so that the size of the molten pool MP formed in the workpiece W coincides with the target size as described above. Here, the "target size" in the present embodiment is a predetermined size of the molten pool MP stored in the storage device 72. Therefore, "setting the target size of the molten pool MP" can be rephrased as follows. That is, the controller 8 first reads information about the size of the molten pool MP stored in the storage device 72. The processing light control operation is an operation for controlling the processing light EL so that the size of the molten pool MP formed in the workpiece W coincides with the size of the molten pool MP read from the storage device 72.

As an example, details of the processing light control operation will be described with reference to FIG. 19, which is the enlarged view showing layers M and N in one molding object BO. In FIG. 19, the vertical direction is a Z direction which is the lamination direction, the left and right directions are the X direction, and a direction perpendicular to the Z direction and the X direction is the Y direction. First, the storage device 72 stores information about the size of the molten pool MP in the molding of an M^{th} layer M (M is a natural number and M > 0) of the one molding object BO. As shown in FIG. 10, information about the size of the molten pool MP in the molding of the M^{th} layer includes information about the position of the molten pool MP, characteristics of the processing light EL (including a scanning direction, a scanning position, a scanning speed, a light intensity, and the like), and information about the size of the molten pool MP. Information about the position of the molten pool MP may include any one item of position information and time information. That is, the storage device 72 may store information about the size of the molten pool MP at predetermined position coordinates or a predetermined time as reference information. For example, in the example shown in FIG. 10, information in which a size MPS1 of the molten pool MP in a specific first processing path constituting a straight line in the wobble shape that is the wave shape and position coordinates (X1, Y1, Z1) obtained by measuring the size MPS1 of the molten pool MP are associated is stored as the reference information. In this case, instead of the position coordinates (X1, Y1, Z1), time T1 (e.g., the time from the start of molding) in which the size MPS1 of the molten pool MP was measured may be stored in association with the size MPS1 of the molten pool MP. Furthermore, the storage device 72 may store information in which a size MPS2 of the molten pool MP on a second processing path whose molding condition is at least different from that of the above-described first processing path and the position coordinates (X2, Y2, Z2) at which the size MPS2 of the molten pool MP was measured are associated as the reference information. In this case, instead of the position coordinates (X2, Y2, Z2), time T2 (e.g., the time from the start of molding) when the size MPS2 of the molten pool MP was measured may be stored in association with the size MPS2 of the molten pool MP. Thus, the storage device 72 stores information about the size of the molten pool MP in the molding of layer M of one molding object BO in association with at least one of the position coordinates and the time. Furthermore, the storage device 72 may update the reference information every time the scanning direction of the processing light EL changes. The storage device 72 may update the reference information every time the deflection conditions of the processing light EL change. Moreover, the storage device 72 may update the reference information when a condition of at least one of a case where the current molding position is changed from predetermined position coordinates by a threshold or more and a case where the current molding time is changed from a predetermined time by a threshold or more is satisfied.

Returning to FIG. 19, the controller 8 subsequently controls the formation of the molten pool MP with the processing system SYS in the N^{th} layer (N is a natural number and N > M) of the same molding object BO on the basis of information about the size of the molten pool MP of the M^{th} layer. A molding shape of the N^{th} layer, for example, may be equivalent to a molding shape of the M^{th} layer. The controller 8 may control the molding of the N^{th} layer to reproduce the size of the molten pool MP in the M^{th} layer where the X coordinate and the Y coordinate coincide. In other words, the controller 8 may control processing of the processing system SYS under a coordinate system defined by the first axis (the X-axis in the present embodiment), the second axis (the Y-axis in the present embodiment), and the third axis (the Z-axis in the present embodiment) that are perpendicular to each other. When an upper layer is processed, the controller 8 may use the reference information in a reference layer serving as a processing reference that is a layer processed at least before the upper layer is processed. The coordinate position in the third axis direction may be different from that of the reference layer and the processing may be performed at a coordinate position identical to that of the reference layer in the first axis direction and the second axis direction. In this case, the M^{th} layer is set as the reference layer and information including the size of the molten pool MP in the M^{th} layer may be stored as the reference information. On the basis of the reference information, the controller 8 controls processing in other layers so that the size of the molten pool MP in the reference layer is reproduced. The reference layer is a plurality of layers such as the M^{th} layer, an O^{th} layer, and a P^{th} layer, and a plurality of reference information items may be stored in association with layer numbers of a plurality of layers. For example, the operator may determine any one of layers M, O, and P of which the reference information is used when the N^{th} layer is molded, the determination may be made automatically. A plurality of information items may be used (e.g., averaged) to perform molding of the N^{th} layer.

Furthermore, the reference layer may be a layer predetermined by the user. For example, the reference layer may be the first layer of the molding object BO. That is, M = 1. The controller may control processing in a layer higher than the reference layer using the reference information in the reference layer. The N^{th} layer may be a layer higher than the M^{th} layer, and may be, for example, a layer that is two or more layers away from the M^{th} layer.

As another example, description will be given with reference to FIG. 20 that is an enlarged view showing layers M and N in the first molding object (first object) BO1 and layers M#2 and N#2 in the second molding object (second object) BO2 different from the first molding object BO1. In this case, the storage device 72 may store information about the size of the molten pool MP in the molding of the M^{th} layer of the first molding object BO1 as reference information. At this time, the M^{th} layer of the first molding object BO1 is used as a reference layer. On the basis of information about the size of the molten pool MP in the M^{th} layer of the first molding object BO1, the controller 8 may control the formation of the molten pool MP by the processing system SYS in the M^{th} layer of the second molding object BO2 different from the first molding object BO1. The molding shape of the first molding object BO1 and the molding shape of the second molding object BO2 may be the same. The controller 8 may control the molding of an M#2^{th} layer so that the size of the molten pool MP in the M^{th} layer that coincides with the time from the start of molding is reproduced. Likewise, the controller 8 may control the molding of an N#2^{th} layer so that the size of the molten pool MP in the N^{th} layer that coincides with the time from the start of molding is reproduced. The controller 8 controls processing in the M#2^{th} layer of the second molding object BO2 so that the size of the molten pool MP in the reference layer is reproduced on the basis of the reference information in the M^{th} layer of the first molding object BO1. The same is true for a relationship between the N^{th} layer and the N#2^{th} layer. Two or more duplicates may be made using the reference information of 1.

Furthermore, molding objects 2 to N may be molded using reference information stored in molding object 1 when molding object 1, molding object 2, molding object 3, ..., molding object N are created. In this case, information about the molten pool of molding objects 2 to N may not be stored.

In the processing light control operation, the controller 8 may calculate a deviation between a set target size (the size of the molten pool MP stored in the storage device 72) and an actually measured size of the molten pool MP. Subsequently, the controller 8 may control the intensity of the processing light EL on the basis of the calculated deviation. As described above, the controller 8 controls the intensity of the processing light EL so that the actually measured size of the molten pool MP coincides with the target size. For this reason, the controller 8 may control the intensity of the processing light EL so that the deviation becomes zero (or approaches zero). At this time, the controller 8 may control the intensity of the processing light EL so that the deviation is in an allowable range of the deviation.

As an example, when the actually measured size of the molten pool MP is larger than the target size, it is necessary to reduce the actually measured molten pool MP so that the molten pool MP coincides with the target size. Here, as the intensity of the processing light EL decreases, an amount of energy transmitted from the processing light EL to the molding surface MS decreases. As the amount of energy transmitted from the processing light EL to the molding surface MS decreases, an amount of molding material M molten in the molding surface MS decreases. As the amount of molding material M to be molten in the molding surface MS decreases, the size of the molten pool MP formed in the molding surface MS decreases. For this reason, when the actually measured size of the molten pool MP is larger than the target size, the intensity of the processing light EL may be controlled so that the intensity of the processing light EL is weakened by an amount based on the deviation.

As another example, if the actually measured size of the molten pool MP is smaller than the target size, it is necessary to increase the actually measured molten pool MP so that the size of the molten pool MP coincides with the target size. Here, as the intensity of the processing light EL increases, the amount of energy transmitted from the processing light EL to the molding surface MS increases. As the amount of energy transmitted from the processing light EL to the molding surface MS increases, the amount of molding material M to be molten in the molding surface MS increases. As the amount of the molding material M to be molten in the molding surface MS increases, the size of the molten pool MP formed in the molding surface MS increases. For this reason, when the actually measured size of the molten pool MP is smaller than the target size, the intensity of the processing light EL may be controlled so that the intensity of the processing light EL becomes stronger by an amount based on the deviation.

The operation for controlling the intensity of the processing light EL on the basis of the deviation may be regarded as a feedback control operation for controlling the intensity of the processing light EL on the basis of the deviation. This is because the operation for controlling the intensity of the processing light EL on the basis of the deviation is an operation for controlling the intensity of the processing light EL affecting the size of the molten pool MP so that the actually measured size of the molten pool MP calculated from the measurement result of the measuring device 71 coincides with (i.e., approaches) the target size.

When the intensity of the processing light EL is feedback-controlled, the controller 8 may perform feedback control including proportional control (P control). The controller 8 may perform feedback control including proportional integral control (PI control). The controller 8 may perform feedback control including proportional integral differential control (PID control). When feedback control including P control is performed, the behavior of the feedback control is defined by a proportional gain Kp. When the feedback control including the PI control is performed, the behavior of feedback control is defined by the proportional gain Kp and an integral gain Ki. When the feedback control including the PID control is performed, the behavior of the feedback control is defined by the proportional gain Kp, the integral gain Ki, and a differential gain Kd.

Each of the proportional gain Kp, the integral gain Ki, and the differential gain Kd is an example of a control parameter K that defines the behavior of a processing light control operation. For this reason, at least one of the proportional gain Kp, the integral gain Ki, and the differential gain Kd may be generated in advance before the light intensity control operation is performed. Therefore, the controller 8 may perform a processing light control operation using the control parameter K (e.g., at least one of the proportional gain Kp, the integral gain Ki, and the differential gain Kd) that is generated in advance before the light intensity control operation is performed.

The controller 8 may control the intensity of the processing light EL by controlling the light source 4. Alternatively, when the irradiation optics 211 of the processing head 21 includes an optical element capable of controlling the intensity of the processing light EL, the controller 8 may control the intensity of the processing light EL by controlling the irradiation optics 211 in addition to or instead of the light source 4.

Furthermore, the controller 8 may control an irradiation time of the processing light EL instead of or in addition to controlling the intensity of the processing light EL. As an example, when the processing light EL is pulsed light, the controller 8 may change an amount of energy transmitted to a predetermined point on the molding surface MS by controlling a time interval of the pulsed light or an emission time of pulsed light. Moreover, the amount of energy transmitted to a predetermined point on the molding surface MS may be changed by controlling the speed of the scanning operation (e.g., the movement speed of the target irradiation area EA due to the scanning operation).

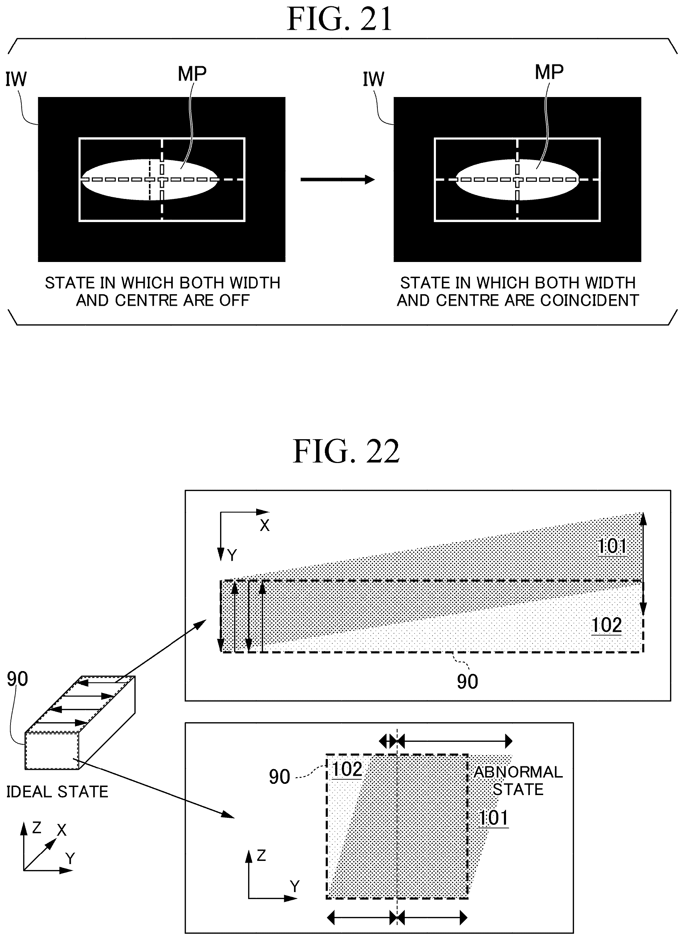

Next, feedback in a linear width direction of the molten pool MP will be described with reference to FIGS. 21 and 22. For example, an example in which the XY plane is observed is shown in FIG. 21, but the present invention is not limited thereto. A result of observing the XZ plane may be used or a result of observing these planes from an oblique angle may be used. Here, when feedback control is performed by observing only the size of the molten pool MP, when the molten pool MP is contained in an angle of view of the workpiece image IW, only uniform feedback can be performed even if the central position is shifted. In order to solve this problem, the controller 8 may store information about the position of the molten pool, for example, store measured positions of both ends (hereinafter referred to as the left and right ends) in the line width direction of the molten pool MP in the reference layer, and perform feedback control so that the central position and the left/right width of the molten pool MP in the layer subsequent to the reference layer are uniform. Specifically, the measuring device 71 may obtain central position information about the central position of the area formed by the molten pool MP formed at positions differing according to the processing light EL deflected by the Galvano-mirror 2112 as deflection optics. Furthermore, the controller 8 may control molding based on the processing system SYS on the basis of the central position information read from the measuring device 71. In this case, the controller 8 may control at least one of a laser intensity and a heat input amount by performing fast laser modulation on the basis of a result of measuring the central position of the molten pool MP. The controller 8 may control a trajectory speed of the processing light EL by operating the Galvano-mirror 2112 on the basis of a result of measuring the central position of the molten pool MP.

In this case, the measuring device 71 may measure the central position of the molten pool MP on the basis of the captured image (the workpiece image IW) and the controller 8 may control molding so that the central position of the molten pool MP is located at the center of the workpiece image IW and the central position of the molten pool MP in the width direction also coincides with the center of the workpiece image IW as shown in the right drawing of FIG. 21 from a state in which both the width and the central position of the molten pool MP are shifted as shown in the left drawing of FIG. 21.

Furthermore, the controller 8 may control the molding operation in the processing system SYS so that the shape approaches the ideal shape 90 of the molten pool MP set or stored in advance. For example, a device capable of measuring a three-dimensional shape such as a 3D scanner is connected to the controller 8 (or the storage device 72 capable of communicating with the controller 8) and the ideal shape 90 of the molten pool MP shown in FIG. 22 may be set in advance according to the measurement result. Although the ideal shape 90 is stored as a cube in the example shown in FIG. 22, the shape of the ideal shape 90 is not limited to a cube. The ideal shape 90 may be a symmetrical shape in the width direction of the molten pool MP. A plurality of ideal shapes 90 may be stored in the storage device 72. The controller 8 may automatically select the optimal ideal shape 90 from a plurality of stored ideal shapes on the basis of the learning model for which machine learning has been performed. The ideal shape may be manually selected by the user on the basis of, for example, processing conditions and the like.

The controller 8 may control the operation of the Galvano-mirror 2112 so that the shape of the observed molten pool MP does not overlap an abnormal area 101, which is an area outside the ideal shape 90. In other words, the controller 8 may control the operation of the Galvano-mirror 2112 so that the shape of the observed molten pool MP overlaps a normal area 102, which is an area coinciding with the ideal shape 90. To make the molten pool MP close to the ideal shape 90, the controller 8 may control molding so that the actually measured shape of the molten pool MP is close to the ideal shape 90 by calculating a difference between the shape of the molten pool MP actually measured by the measuring device 71 and the ideal shape 90 and offsetting the difference. In this case, the optimal ideal shape 90 may be selected from a plurality of ideal shapes in accordance with at least one of the wobble shape of the processing light EL, the scanning direction of the processing light EL, the scanning position of the processing light EL, and the actually measured shape of the molten pool MP.

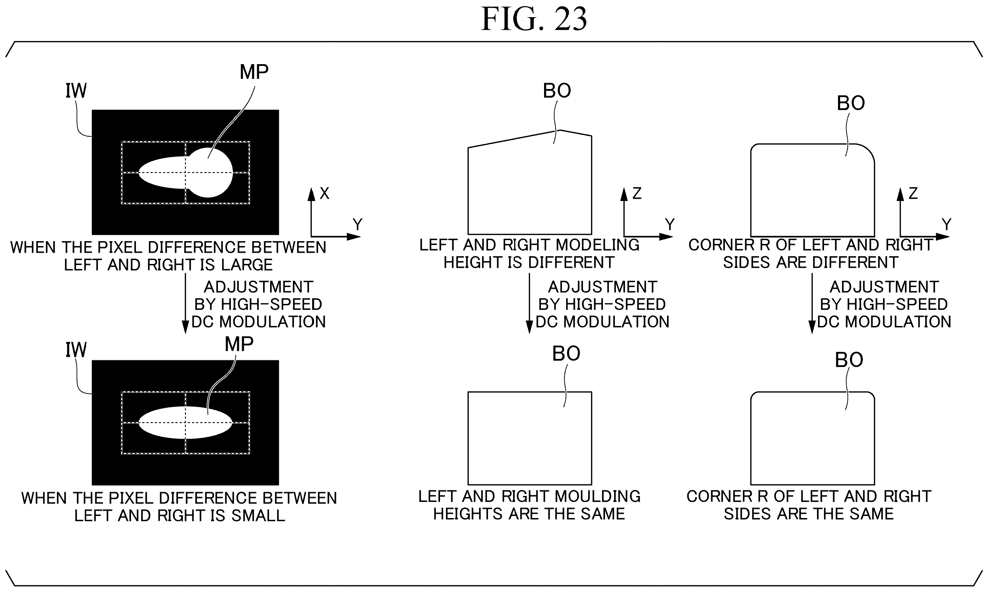

In addition to the control for causing the above-described central position and width of the molten pool MP to coincide with the central position of the workpiece image IW, the controller 8 may further perform control for reducing a left/right difference in the number of pixels of the workpiece image IW for the central position coinciding therewith. The upper part of FIG. 23 shows the workpiece image IW when a difference of the number of pixels between the left and right for the central position is large (i.e., when the line width of the molten pool MP is uneven). The lower part of FIG. 23 shows a workpiece image IW when the difference of the number of pixels between the left and right for the central position is uniform (i.e., when the line width of the molten pool MP is uniform). As shown in the upper part of FIG. 23, when the difference in the number of left/right pixels is large, molding heights of the left and right sides in the molding object BO are different from each other or roundness degrees (angles R) in the left and right corners in the molding object BO are different from each other, such that there is a possibility of an influence on the precision of the molding object BO. Therefore, the controller 8 may control at least one of a laser intensity and a heat input amount, for example, by performing fast laser modulation of the Galvano-mirror 2112, on the basis of a result of measuring the shape of the molten pool MP. Thereby, as shown in the lower part of FIG. 23, a workpiece image IW having a small difference of the number of pixels between the left and right is obtained. Because the difference of the number of pixels between the left and right in the workpiece image IW is reduced, the molding height in the molding object BO or the roundness degree (angle R) in the corner part may be uniform on the left and right. Furthermore, the controller 8 may control a trajectory speed of the processing light EL, for example, by operating the Galvano-mirror 2112 on the basis of the result of measuring the shape of the molten pool MP.

When it is determined that the molding operation has been completed by the controller 8, the controller 8 ends the above-described processing light control operation. After the molding operation is completed, the controller 8 may output a file of information in which information about the stored size of the molten pool MP and information about the position or molding time are associated. By using the output file at the next molding, the previous molding may be reproduced in the next molding.

### (2-4) Control signal generation operation

Next, a control signal generation operation will be described. The controller 8 may acquire information about a reference value for a target intensity from the controller 8 included in the processing system SYS. The controller 8 may generate a control signal SG1 for controlling the light source 4 so that the intensity of the processing light EL generated by the light source 4 is a set target intensity (i.e., the reference value for the target intensity). In this case, the controller 8 may acquire the control signal SG1 as information about the reference value for the target intensity. In this case, the controller 8 may be considered responsible for setting the target intensity of the processing light EL on the basis of the workpiece image WI and the control signal SG1. Furthermore, the controller 8 may generate a control signal SG2 for controlling the intensity (i.e., characteristics) of the processing light EL generated by the light source 4 so that the intensity of the processing light EL generated by the light source 4 becomes a controlled and set target intensity. In this case, the controller 8 may generate the control signal SG2 for controlling the light source 4 on the basis of the size of the molten pool MP measured from the workpiece image IW by the measuring device 71. Specifically, the controller 8 sets the target intensity of the processing light EL generated by the light source 4 on the basis of the measured size of the molten pool MP and the control signal SG1 acquired from the controller 8. Subsequently, the controller 8 generates the control signal SG2 for controlling the light source 4 so that the intensity of the processing light EL generated by the light source 4 is a set target intensity. As a result, the light source 4 is driven on the basis of the control signal SG2 generated by the controller 8 instead of the control signal SG1 generated by the controller 8. That is, the light source 4 generates the processing light EL of a desired intensity so that the size of the molten pool MP coincides with the target size.

Furthermore, the controller 8 may not perform a molten pool information acquisition operation during at least a part of a period during which the light source 4 is not generating the processing light EL. The control signal SG1 may be acquired from the controller 8 so that it is determined whether or not the light source 4 is generating the processing light EL and the controller 8 may determine whether or not the light source 4 is generating the processing light EL on the basis of the acquired control signal SG1. Alternatively, optical ON/OFF information indicating whether or not the light source 4 is generating the processing light EL may be acquired from the controller 8 and the controller 8 may determine whether or not the light source 4 is generating the processing light EL on the basis of the acquired information. Furthermore, as described above, the optical ON/OFF information may be input to the controller 8 using, for example, a signal pin such as an input/output connector (not shown).

### (3) Technical effects of processing system SYS according to present embodiment

As described above, in the present embodiment, the processing system SYS includes the measuring device 71 configured to acquire information about a size of the molten pool MP and the storage device 72 configured to store information about the size of the molten pool MP acquired by the measuring device 71 in association with information about a position of the molten pool MP. By providing the storage device 72 configured to store the molten pool MP in this way, the size of the molten pool MP for the position coordinates or time in the reference layer can be stored. Moreover, the controller 8 controls the processing system SYS so that the size of the molten pool MP formed by the irradiation of the processing light EL coincides with the size of the molten pool MP read from the storage device 72. Thereby, the size of the molten pool MP of the reference layer can be reproduced in the next and subsequent layers. Furthermore, by outputting the file of the stored information, the output file information can be applied to the next molding (molding different from the molding having the reference layer) to reproduce molding having the reference layer.

In the present embodiment, the controller 8 controls the processing system SYS on the basis of the measurement result of the measuring device 71 and changes the measurement target area 100 of the molten pool MP in the measuring device 71 on the basis of a deflection condition that is a condition for deflecting the processing light EL. Thereby, because image processing is performed only on an area necessary for feedback within the workpiece image IW, image processing can be speeded up. Furthermore, it is possible to detect an area value of the displayed molten pool MP with high accuracy by narrowing the image processing range in addition to an increase in the speed. That is, the size of the molten pool MP can be measured with high accuracy. Furthermore, the spatter can be removed at the same time by limiting the image area used for feedback to only the measurement target area 100. Furthermore, for example, an influence of the number of pixels changing on the workpiece image IW due to a positional relationship between the imaging head 80 (camera) and the molding object can be suppressed and the occurrence of molding collapse due to a decrease in a laser output can be suppressed.

In the present embodiment, the ideal shape 90 of the molten pool MP is set in advance in the storage device 72 and the controller 8 controls molding so that the actually measured shape of the molten pool MP is close to the ideal shape 90 by calculating the difference between the shape of the molten pool MP actually measured by the measuring device 71 and the ideal shape 90 and offsetting the difference. Because the ideal shape 90 is a symmetrical shape in the width direction and the controller 8 performs control so that the central position of the molten pool MP in the reference layer and the left and right widths are uniform, the line width on one line of the molding object BO can be uniformized. Thereby, it is possible to suppress the change in the line width due to overlapping shapes. Furthermore, the controller 8 controls the left-right difference in the number of pixels on the workpiece image IW for the central position of the molten pool MP so that the left-right difference is reduced. By aligning the number of pixels (reducing the difference between the left and right), it is possible to make the left and right molding heights and the angles R in the molding object BO uniform.

The configuration of the processing system SYS described above can be rephrased as follows. That is, the processing system SYS includes the processing device 2 configured to mold the molding object BO and including the irradiation optics 211 capable of radiating a processing beam (the processing light EL) and a material supply unit (the material supply device 1) capable of supplying the molding material M to a portion where a molten pool MP is formed by radiating the processing beam; the measuring device 71 configured to acquire information about a size of the molten pool MP formed by radiating the processing beam; the storage device 72 configured to store the information about the size of the molten pool MP acquired by the measuring device 71 in association with information about a position of the molten pool MP; and the controller 8, wherein the storage device 72 stores the information about the size of the molten pool MP in molding of an M^{th} layer of the first molding object BO1, and wherein the controller 8 controls formation of the molten pool MP by the processing device 2 in an M^{th} layer of the second molding object BO2 different from the first molding object BO1 on the basis of the information about the size of the molten pool MP of the M^{th} layer of the first molding object BO1.

Alternatively, it can be rephrased as follows. That is, the processing system SYS includes the processing device 2 configured to mold the molding object BO and including the irradiation optics 211 capable of radiating a processing beam (the processing light EL) and a material supply unit (the material supply device 1) capable of supplying the molding material M to a portion where a molten pool MP is formed by radiating the processing beam; the measuring device 71 configured to acquire information about a size of the molten pool MP formed by radiating the processing beam; the storage device 72 configured to store the information about the size of the molten pool MP acquired by the measuring device 71 in association with information about a position of the molten pool MP; and the controller 8, wherein the storage device 72 stores the information about the size of the molten pool MP in molding of an M^{th} (M is a natural number and M > 0) layer of the molding object, and wherein the controller 8 controls formation of the molten pool MP by the processing device 2 in an N^{th} (N is a natural number and N > M) layer of the molding object on the basis of the information about the size of the molten pool MP of the M^{th} layer.

Alternatively, it can be rephrased as follows. That is, the processing system SYS includes the processing device 2 configured to process an object and including irradiation optics capable of radiating a processing beam (the processing light EL), a first moving device (e.g., the stage 31 in the present embodiment) capable of moving an irradiation position of the processing beam along a target trajectory based on a processing path, and a second moving device (e.g., the Galvano-mirror 2112 in the present embodiment) capable of moving the processing beam in a direction intersecting the target trajectory; the measuring device 71 configured to acquire information about the molten pool MP formed by radiating the processing beam; and the controller 8, wherein the controller 8 may decide the measurement target area 100 of the measuring device 71 on the basis of a movement condition that is a condition for moving the processing beam with the second moving device.

Alternatively, it can be rephrased as follows. That is, the processing system SYS includes the processing device 2 configured to mold the molding object BO and including the irradiation optics 211 capable of radiating a processing beam (the processing light EL) and a material supply unit (the material supply device 1) capable of supplying the molding material to a portion where a molten pool MP is formed by radiating the processing beam; the measuring device 71 configured to acquire information about the molten pool formed on a first object by radiating the processing beam; the storage device 72 configured to store the information about the molten pool MP acquired by the measuring device 71 in association with information about a position of the molten pool MP; and the controller 8, wherein the controller 8 may read the information about the molten pool MP from the storage device 72 and control the processing device so that a molten pool MP formed on a second object by radiating the processing beam reproduces the molten pool MP read from the storage device 72. In this case, the controller 8 may control the processing device 2 so that the molten pool MP formed on the first object is reproduced on the second object on the basis of the information about the molten pool MP read from the storage device 72 corresponding to the position on the second object to which the processing beam is radiated. The molten pool MP formed on the first object may be a molten pool formed for molding the M^{th} layer (M is a natural number and M > 0) of the first molding object and the molten pool MP formed on the second object may be a molten pool formed for molding the M^{th} layer of the second molding object different from the first object. The molten pool MP formed on the first object may be a molten pool formed for molding the M^{th} layer (M is a natural number and M > 0) of the molding object BO and the molten pool MP formed on the second object may be a molten pool formed for molding the N^{th} layer (N is a natural number and N > M) of the molding object BO.

Furthermore, the above-described configuration of the processing system SYS can be said to be a configuration in which the controller 8 has a data structure having the following configuration. That is, the data structure of the controller 8 is a data structure for use in the processing device 2 configured to mold the molding object BO and including the irradiation optics 211 capable of radiating a processing beam (processing light EL) and the material supply unit (the material supply device 1) capable of supplying a molding material to a portion where the molten pool MP is formed by radiating the processing beam, wherein information about the size of the molten pool MP formed by the processing device 2 and the position where the molten pool MP is formed are associated.

The data structure of the controller 8 may be a data structure for use in the processing device 2 capable of molding the molding object BO and including the irradiation optics 211 capable of radiating a processing beam (processing light EL), the material supply unit (the material supply device 1) capable of supplying a molding material to a portion where the molten pool MP is formed by radiating the processing beam, a moving device (for example, the stage 31 in the present embodiment) capable of moving an irradiation position of the processing beam along a target trajectory based on a processing path, and deflection optics (the Galvano-mirror 2112) capable of deflecting the processing beam in a direction intersecting the target trajectory and a deflection condition that is a condition for deflecting the processing beam and information about the measurement target area 100 measured by the measuring device 71 may be associated. Furthermore, the above-described data structure may be provided outside the controller 8 (e.g., an external device or the like).

Moreover, the configuration of the processing system SYS described above can be said to be a method for processing a molding object BO having the following configuration. That is, the method for processing the molding object BO includes radiating a processing beam (processing light EL) to an object; molding the molding object BO by supplying a molding material to a portion where a molten pool MP is formed by radiating the processing beam; acquiring information about a size of the molten pool MP formed by radiating the processing beam; storing the acquired information about the size of the molten pool MP in association with information about a position of the molten pool MP; reading the information about the size of the molten pool MP and controlling the molding so that the size of the molten pool MP formed by radiating the processing beam coincides with the size of the molten pool MP read from the storage device 72.

The method for processing the molding object BO may include radiating a processing beam (processing light EL) to an object; moving an irradiation position of the processing beam along a target trajectory based on a processing path; deflecting the processing beam in a direction intersecting the target trajectory; molding a molding object by supplying a molding material to a portion where a molten pool MP is formed by radiating the processing beam; acquiring information about a size of the molten pool MP formed by radiating the processing beam; and controlling molding on the basis of the acquired information about the size of the molten pool MP and changing the measurement target area 100 of the molten pool MP for acquiring information about the size of the molten pool MP on the basis of a deflection condition that is a condition for deflecting the processing beam.

The method for processing the molding object BO may include radiating a processing beam (the processing light EL) to an object; molding a molding object by supplying a molding material to a portion where a molten pool MP is formed by radiating the processing beam; acquiring information about the molten pool MP formed by radiating the processing beam; storing the acquired information about the molten pool MP in association with information about a position of the molten pool MP; and reading the information about the molten pool MP and controlling the molding so that the molten pool MP formed by radiating the processing beam reproduces the read molten pool MP.

### (4) Modified examples

Subsequently, modified examples of the processing system SYS, the data structure, and the processing method will be described. Hereinafter, the modified example of the processing system SYS will be described, but these configurations can also be applied to data structures and processing methods.

In the above-described embodiment, the imaging head 80 can be attached to the processing head 21. However, the imaging head 80 may be attached to a member different from the processing head 21. For example, the imaging head 80 may be attached to at least a part of the processing device 2. For example, the imaging head 80 may be attached to at least a part of the stage device 3 (e.g., at least a part of the stage 31). For example, the imaging head 80 may be attached to at least a part of the housing 6. Alternatively, the imaging head 80 may be integrated with a member different from the processing head 21.

In the above-described embodiment, the processing system SYS includes a mirror as an optical member for guiding the workpiece light WL from the workpiece W to the imaging head 80. However, an optical member different from the mirror may be used as an optical member for guiding the workpiece light WL from the workpiece W to the imaging head 80. For example, a prism may be used as the optical member for guiding the workpiece light WL from the workpiece W to the imaging head 80.

The processing system SYS may not include a mirror. That is, the controller 8 may not include the optical member for guiding the workpiece light WL from the workpiece W to the imaging head 80. In this case, the imaging head 80 may receive the workpiece light WL without going through the mirror.

In the above-described embodiment, the imaging head 80 receives the workpiece light WL including light emitted by the workpiece W (e.g., the workpiece light WL including light emitted by the molten pool MP formed in the workpiece W). However, an illumination device may radiate illumination light to the workpiece W and the imaging head 80 may receive the workpiece light WL including illumination light via the workpiece W (e.g., reflection light reflected by the workpiece W). The illumination device may be provided in the controller 8. The illumination device may be provided outside the controller 8. Moreover, the imaging head 80 may receive the workpiece light WL via at least a part of the irradiation optics 211.

The imaging head 80 may receive the workpiece light WL from at least a part of the workpiece W (in particular, at least a part of the molten pool MP) via a predetermined optical filter. An example of the predetermined optical filter is a filter for allowing infrared rays (e.g., light having a wavelength in a range of about 700 nm to about 1 mm) to pass through and blocking light different from infrared rays (e.g., light whose wavelength is not included in a range of about 700 nm to about 1 mm, for example, visible light). In this case, the workpiece image WI generated by the imaging head 80 receiving the workpiece light WL may be used as an image representing the temperature distribution of at least a part of the workpiece W (a so-called temperature map). That is, the imaging head 80 may generate a workpiece image WI that represents at least a part of the temperature distribution of the workpiece W (i.e., available as a temperature map). The imaging head 80 may be used as a temperature measuring device for acquiring information about the temperature of at least a part of the workpiece W.

In the above-described embodiment, the imaging head 80 generates a workpiece image WI in which the molten pool MP is shown by imaging at least a part of the workpiece W (in particular, at least a part of the molten pool MP). However, the imaging head 80 images the molten pool MP and at least a part of a solidified metal (i.e., a molding object, hereinafter referred to as a "peripheral molding object") distributed around the molten pool MP so that the workpiece image WI in which the molten pool MP and a peripheral molding object are shown may be generated. The imaging head 80 may image the peripheral molding object so that the workpiece image WI in which the molten pool MP is not shown and the peripheral molding object is shown may be generated. In this case, the controller 8 may control the operation of the processing system SYS on the basis of the workpiece image WI in which the peripheral molding object is shown. For example, the controller 8 may calculate a position of the peripheral molding object constituting the structural layer SL (e.g., the position in the Z-axis direction, substantially, the height) on the basis of the workpiece image WI and control the operation of the processing system SYS so that the remaining part of one structural layer SL is formed on the basis of the calculated position of the peripheral molding object. For example, the controller 8 may calculate a position of the peripheral molding object constituting the structural layer SL (e.g., the position in the Z-axis direction, substantially, the height) on the basis of the workpiece image WI and control the operation of the processing system SYS so that another structural layer SL formed on one structural layer SL is formed on the basis of the calculated position of the peripheral molding object.

The imaging head 80 may image an object different from the workpiece W. For example, the imaging head 80 may image at least a part of the stage 31. For example, the imaging head 80 may image at least a part of the processing head 21. For example, the imaging head 80 may image at least a part of the material nozzle 212. For example, the imaging head 80 may image at least a part of the molding material M supplied from the material nozzle 212. For example, the imaging head 80 may image at least a part of the chamber space. Even in this case, the controller 8 may control the operation of the processing system SYS on the basis of the image generated by the imaging head 80.

In the above description, the imaging head 80 is accommodated in the housing 6. However, the imaging head 80 may not be accommodated in the housing 6. In this case, the imaging head 80 may not include the housing 6. In the above-described description, the measuring device 71 (the imaging head 80) measures (images) the molten pool MP from an oblique angle with respect to the molding object. However, the measuring device 71 (the imaging head 80) may measure (image) the molten pool MP from directly above the molding object (from the direction along the optical axis of the irradiation optics 211).

In the above-described embodiment, the measuring device 71 included in the processing system SYS is located in the chamber space 63IN. However, the measuring device 71 may be located at a position different from the chamber space 63IN. For example, the measuring device 71 may be located in the external space 64OUT. The measuring device 71 may be capable of measuring the workpiece W (in particular, the molten pool MP formed in the workpiece W) from the external space 64OUT.

In the above-described embodiment, the processing system SYS includes the measuring device 71 capable of measuring a size of the molten pool MP formed in the workpiece W. However, the processing system SYS may include a first measuring device capable of measuring the molten pool MP formed on the workpiece W and a second measuring device capable of measuring the molding object molded on the workpiece W. That is, a function for measuring the molten pool MP and a function for measuring the molding object BO may be provided separately.

In the above-described embodiment, both an imaging operation and an image processing operation are performed during the molten pool information acquisition operation. However, it is not necessary to perform all of the above-described image processing operation during the molten pool information acquisition operation. That is, only a part of the image processing operation may be performed. Specifically, only a part of any one of the above-described process (1) of removing spatter by adding the workpiece image IW, process (2) of removing spatter by setting a new offset integral threshold 84 in the moldable range 82 for the initially set integral threshold 81, process (3) of speeding up image processing by setting the measurement target area 100 in a part of the workpiece image IW and measuring the size of the molten pool MP on the basis of image information of the molten pool MP located in the measurement target area 100 may be performed.

In the above-described embodiment, the processing system SYS includes a head drive system 22. That is, the processing head 21 is movable. However, the processing system SYS may not include the head drive system 22. That is, the processing head 21 may not be movable. Moreover, in the above-described description, the processing system SYS includes the stage drive system 32. That is, the stage 31 is movable. However, the processing system SYS may not include a stage drive system 32. That is, stage 31 may not be movable.

In the above-described embodiment, the processing device 2 melts the molding material M by irradiating the molding material M with the processing light EL. However, the processing device 2 may melt the molding material M by radiating any energy beam to the molding material M. In this case, the processing device 2 may include a beam irradiation device capable of radiating any energy beam in addition to or instead of the irradiation optics 211. An example of any energy beam is at least one of charged particle beam (e.g., at least one of an electron beam, an ion beam, and the like), an electromagnetic wave, and the like.

The controller 8 may change the target size of the molten pool MP when the type of molding material M used in the molding operation changes. When the type of molding material M used in the molding operation changes, even if the molding conditions (e.g., light intensity conditions and scanning speed conditions) are not changed, there is a possibility that a relationship between the line width of the molding object BO and the target size of the molten pool MP will change. For example, there is a possibility that the molding object BO of a first line width will be molded if the molten pool MP of the first size is formed when the main molding operation is performed using the processing light EL having a first intensity and moving at a first scanning speed and a first type of molding material M and the molding object BO of a second line width different from the first line width will be molded if the molten pool MP of the first size is formed when the main molding operation is performed using the processing light EL having the first intensity and moving at the first scanning speed and a second type of molding material M different from the first type. For this reason, the controller 8 may set a target size of the molten pool MP on the basis of the type of molding material M.

The controller 8 may correct the calculated size of the molten pool MP or the workpiece image IW itself on the basis of processing information. The controller 8 may correct the workpiece image WI on the basis of the processing information and measure the size of the molten pool MP on the basis of the corrected workpiece image WI. For example, the controller 8 may correct the workpiece image WI so that the correction method of the workpiece image WI when the target irradiation area EA is moving in the first moving direction is different from the correction method of the workpiece image WI when the target irradiation area EA is moving in the second moving direction. For example, the controller 8 may correct the workpiece image WI so that a correction method for the workpiece image WI when the angle of the stage 31 becomes a first angle is different from a correction method for the workpiece image WI when the angle of the stage 31 becomes a second angle. For example, the controller 8 may correct the workpiece image WI so that a correction method for the workpiece image WI when the shape of the existing molding object becomes a first shape is different from a correction method for the workpiece image WI when the shape of the existing molding object becomes a second shape.

Specifically, for example, the controller 8 may correct the workpiece image WI so that the molten pool MP shown in the workpiece image WI becomes larger under a situation where the apparent size of the molten pool MP shown in the workpiece image WI is smaller than an actual size of the molten pool MP. For example, the controller 8 may correct the workpiece image WI so that the molten pool MP shown in the workpiece image WI becomes smaller under a situation where the apparent size of the molten pool MP shown in the workpiece image WI is larger than the actual size of the molten pool MP. For example, the controller 8 may not correct the workpiece image WI under a situation where the apparent size of the molten pool MP shown in the workpiece image WI coincides with the actual size of the molten pool MP. That is, the controller 8 may correct the workpiece image WI so that the apparent size of the molten pool MP shown in the workpiece image WI approaches or coincides with the actual size of the molten pool MP.

The processing system SYS may further include a display. The display functions as a display device capable of displaying a desired image under the control of the controller 8. The display may include a display included in the processing system SYS (i.e., a display built into the processing system SYS). The display may include a display that can be externally attached to the processing system SYS. Alternatively, a display included in a device different from the processing system SYS may display a desired image under the control of the controller 8. For example, the display included in at least one of the laptop and tablet may display a desired image under the control of the controller 8. In this case, the processing system SYS may not include a display.

In the above-described description, the processing system SYS performs an additional process by the laser metal deposition method. However, the processing system SYS may form a molding object BO from the molding material M by another method that enables the molding object BO to be molded by irradiating the molding material M with the processing light EL (or any energy beam). Alternatively, the processing system SYS may form the molding object BO by any method for an additional process, which is different from a method for irradiating the molding material M with the processing light EL (or any energy beam).

As an example, the processing system SYS may form a three-dimensional structure ST by performing an additional process based on a powder bed fusion method such as a powder-sintering lamination molding method (selective laser sintering (SLS)). That is, the processing system SYS may form a three-dimensional structure ST by iterating an operation of evenly spreading the powder used as the molding material M and then irradiating at least a part of the evenly spread powder with the processing light EL. In this case, the controller 8 may consider the collection of evenly spread powders as the workpiece W. That is, the controller 8 may generate the workpiece image WI by imaging at least a part of the workpiece W corresponding to a collection of evenly spread powders and control the operation of the processing system SYS on the basis of the workpiece image WI. Moreover, even if the powder bed fusion method is used, the molten pool MP (i.e., a molten pool MP formed by the molten powder) is formed on at least a part of the evenly spread powder by radiating the processing light EL. In this case, the controller 8 may generate a workpiece image WI by imaging at least a portion of the molten pool MP formed in at least a part of the evenly spread powder and control the operation of the processing system SYS on the basis of the workpiece image WI.

Alternatively, the processing system SYS may perform a removal process of enabling at least a part of the object to be removed by irradiating an object such as the workpiece W with the processing light EL (or any energy beam) in addition to or instead of an additional process. Alternatively, the processing system SYS may perform a marking process for irradiating an object such as the workpiece W with the processing light EL (or any energy beam) and enabling a mark (e.g., a letter, a number, or a figure) to be formed on at least a part of the object in addition to or instead of an additional process and/or removal process.

The above-described processing device 2 (in particular, the processing head 21) may be attached to a robot (typically an articulated robot). For example, the processing device 2 (in particular, the processing head 21) may be attached to a welding robot for performing welding. For example, the processing device 2 (in particular, the processing head 21) may be attached to an autonomous mobile robot.

At least some of the configuration requirements of the embodiments described above can be appropriately combined with at least some of the other configuration requirements of the embodiments described above. Some of the configuration requirements of the above-described embodiments may not be used.

The present invention is not limited to the above-described embodiments and may be modified as appropriate within the scope of the claims and the subject matter or concept of the invention as can be read from the entire specification, and the processing system, data structure, and processing method involving such modifications are also included in the technical scope of the present invention.

### REFERENCE SIGNS LIST

1 Material supply device (material supply unit)
2 Processing device
8 Controller
22 Head drive system (moving device)
31 Stages (moving device)
71 Measuring device
72 Storage device
90 Ideal shape
100 Measurement target area
211 Irradiation optic
2112 Galvano-mirror (deflection optics)
BO Molding object
BO1 First molding object (first object)
BO2 Second molding object (second object)
EL Processing Light
IW Workpiece image
M Molding material
MP Molten pool
SYS Processing system

## Claims

1. A processing system comprising:
a processing device configured to mold a molding object and including irradiation optics capable of radiating a processing beam and a material supply unit capable of supplying a molding material to a portion where a molten pool is formed by radiating the processing beam;
a measuring device configured to acquire information about a size of the molten pool formed by radiating the processing beam;
a storage device configured to store the information about the size of the molten pool acquired by the measuring device in association with information about a position of the molten pool; and
a controller,
wherein the storage device stores the information about the size of the molten pool in molding of an M^{th} layer of a first molding object, and
wherein the controller controls formation of the molten pool by the processing device in an M^{th} layer of a second molding object different from the first molding object on the basis of the information about the size of the molten pool of the M^{th} layer of the first molding object.

2. A processing system comprising:
a processing device configured to mold a molding object and including irradiation optics capable of radiating a processing beam and a material supply unit capable of supplying a molding material to a portion where a molten pool is formed by radiating the processing beam;
a measuring device configured to acquire information about a size of the molten pool formed by radiating the processing beam;
a storage device configured to store the information about the size of the molten pool acquired by the measuring device in association with information about a position of the molten pool; and
a controller,
wherein the storage device stores the information about the size of the molten pool in molding of an M^{th} (M is a natural number and M > 0) layer of the molding object, and
wherein the controller controls formation of the molten pool by the processing device in an N^{th} (N is a natural number and N > M) layer of the molding object on the basis of the information about the size of the molten pool of the M^{th} layer.

3. The processing system according to claim 1 or 2, wherein the information about the position of the molten pool includes position information or time information.

4. The processing system according to claim 3, wherein the storage device stores the information about the size of the molten pool at predetermined position coordinates or a predetermined time as reference information and updates the reference information every time a scanning direction of the processing beam changes.

5. The processing system according to claim 3 or 4, wherein the storage device stores the information about the size of the molten pool at predetermined position coordinates or a predetermined time as reference information and updates the reference information every time a deflection condition of the processing beam changes.

6. The processing system according to any one of claims 3 to 5,
wherein the storage device stores the information about the size of the molten pool at predetermined position coordinates or a predetermined time as reference information, and
wherein the storage device updates the reference information when a condition of at least one of a case where a current molding position has changed from the predetermined position coordinates by a threshold or more and a case where a current molding time has changed from the predetermined time by a threshold or more is satisfied.

7. The processing system according to any one of claims 3 to 6,
wherein the storage device stores the information about the size of the molten pool formed in a reference layer set in the molding object as reference information, and
wherein the controller controls processing in another layer so that the size of the molten pool in the reference layer is reproduced on the basis of the reference information.

8. The processing system according to claim 7, wherein the reference layer is a layer predetermined by a user.

9. The processing system according to claim 7, wherein the reference layer is a first layer of the molding object.

10. The processing system according to any one of claims 7 to 9, wherein the controller controls processing in a layer higher than the reference layer using the reference information in the reference layer.

11. The processing system according to claim 10,
wherein the controller controls processing by the processing device under a coordinate system specified by a first axis, a second axis, and a third axis orthogonal to each other, and
wherein the controller processes the higher layer at a coordinate position in a direction of the third axis different from that of the reference layer and coordinate positions in directions of the first and second axes identical to those of the reference layer using the reference information in the reference layer.

12. A processing system comprising:
a processing device configured to mold a molding object and including irradiation optics capable of radiating a processing beam, a material supply unit capable of supplying a molding material to a portion where a molten pool is formed by radiating the processing beam, a moving device capable of moving an irradiation position of the processing beam along a target trajectory based on a processing path, and deflection optics capable of deflecting the processing beam in a direction intersecting the target trajectory;
a measuring device configured to acquire information about a size of the molten pool formed by radiating the processing beam; and
a controller,
wherein the controller controls the processing device on the basis of a measurement result of the measuring device and changes a measurement target area of the measuring device in the molten pool on the basis of a deflection condition that is a condition for deflecting the processing beam.

13. The processing system according to claim 12, further comprising a storage device configured to store information about the measurement target area of the molten pool in association with the deflection condition,
wherein the controller changes the measurement target area of the molten pool on the basis of the information about the measurement target area of the molten pool associated with the deflection condition stored in the storage device.

14. The processing system according to claim 12 or 13, wherein the deflection optics can periodically move the processing beam in a scanning direction intersecting the target trajectory.

15. The processing system according to any one of claims 12 to 14, wherein the deflection optics can move an irradiation position of the processing beam on a surface of an object by deflecting the processing beam.

16. The processing system according to any one of claims 12 to 15,
wherein the deflection condition includes a wobble shape of the processing beam, and
wherein the controller sets the measurement target area for each wobble shape of the processing beam.

17. The processing system according to any one of claims 12 to 16, wherein the controller sets a corresponding measurement target area for each scanning direction of the processing beam.

18. The processing system according to any one of claims 12 to 17, wherein the controller sets a corresponding measurement target area for each scanning position of the processing beam.

19. The processing system according to any one of claims 12 to 18, wherein the controller determines a variation in at least one of a wobble shape of the processing beam, a scanning direction of the processing beam, and a scanning position of the processing beam on the basis of processing information of the molding object and updates a setting of the measurement target area when the determined variation exceeds a threshold.

20. The processing system according to any one of claims 12 to 19, wherein the controller automatically determines a variation in at least one of a wobble shape of the processing beam, a scanning direction of the processing beam, and a scanning position of the processing beam from a captured image and updates a setting of the measurement target area on the basis of the determined variation.

21. The processing system according to claim 20, wherein the controller automatically determines the variation from the image on the basis of a learning model for which machine learning has been performed.

22. The processing system according to any one of claims 12 to 21, wherein a user manually sets the measurement target area on the basis of a measurement result of the measuring device.

23. The processing system according to any one of claims 12 to 22, wherein changing the measurement target area of the measuring device in the molten pool includes changing a target area of image processing related to the molten pool.

24. The processing system according to any one of claims 12 to 23, wherein the controller
controls the processing device on the basis of a measurement result of the measuring device and a target size of the molten pool formed by the processing device, and
changes the target size of the molten pool on the basis of a deflection condition that is a condition for deflecting the processing beam.

25. The processing system according to claim 24, further comprising a storage device configured to store information about the target size of the molten pool in association with the deflection condition,
wherein the controller changes the target size of the molten pool on the basis of the information about the target size of the molten pool associated with the deflection condition stored in the storage device.

26. The processing system according to claim 25, wherein the storage device further stores a wobble shape of the processing beam and stores a corresponding target size for each wobble shape.

27. The processing system according to claim 25 or 26, wherein the storage device further stores a scanning direction of the processing beam and stores a corresponding target size for each scanning direction.

28. The processing system according to any one of claims 25 to 27, wherein the storage device further stores a scanning position of the processing beam and stores a corresponding target size for each scanning position.

29. The processing system according to any one of claims 25 to 28, wherein the storage device determines a variation in at least one of a wobble shape of the processing beam, a scanning direction of the processing beam, and a scanning position of the processing beam on the basis of processing information of the molding object and updates a setting of the target size when the determined variation exceeds a threshold.

30. The processing system according to any one of claims 25 to 29, wherein the storage device automatically determines a variation in at least one of a wobble shape of the processing beam, a scanning direction of the processing beam, and a scanning position of the processing beam from a captured image and updates the target size on the basis of the determined variation.

31. The processing system according to claim 30, wherein the storage device automatically determines the variation from the image on the basis of a learning model for which machine learning has been performed.

32. The processing system according to any one of claims 24 to 31, wherein the deflection optics can periodically move the processing beam in a scanning direction intersecting the target trajectory.

33. The processing system according to any one of claims 24 to 32, wherein the deflection optics can move an irradiation position of the processing beam on a surface of an object by deflecting the processing beam.

34. The processing system according to any one of claims 1 to 33, wherein the processing device further includes a moving device capable of moving an irradiation position of the processing beam along a target trajectory based on a processing path and deflection optics capable of deflecting the processing beam in a direction intersecting the target trajectory,
wherein the measuring device can acquire shape information about the molten pool that is formed at a position differing according to the processing beam deflected by the deflection optics and continuously moves, and
wherein the controller controls molding of the processing device on the basis of the shape information.

35. The processing system according to claim 34, wherein the controller controls at least one of a laser intensity and a heat input amount by performing fast laser modulation on the basis of a measurement result of a shape of the molten pool.

36. The processing system according to claim 34 or 35, wherein the controller controls a trajectory speed of the processing beam by operating a Galvano-mirror on the basis of a measurement result of a shape of the molten pool.

37. The processing system according to any one of claims 34 to 36,
wherein an ideal shape of the molten pool is preset in the controller, and
wherein the controller controls the molding so that an actually measured shape of the molten pool approaches the ideal shape by calculating a difference between the shape of the molten pool actually measured by the measurement device and the ideal shape and offsetting the difference.

38. The processing system according to claim 37, wherein the ideal shape is a shape symmetrical in a width direction of the molten pool.

39. The processing system according to claim 37 or 38, wherein a plurality of ideal shapes are stored in the controller and an optimal ideal shape is selected from among the plurality of ideal shapes in accordance with at least one of a wobble shape of the processing beam, a scanning direction of the processing beam, a scanning position of the processing beam, and the actually measured shape of the molten pool.

40. The processing system according to claim 39, wherein the controller automatically selects the optimal ideal shape from among the plurality of ideal shapes on the basis of a learning model for which machine learning has been performed.

41. The processing system according to any one of claims 1 to 40, further comprising a moving device capable of moving an irradiation position of the processing beam along a target trajectory based on a processing path and deflection optics capable of deflecting the processing beam in a direction intersecting the target trajectory,
wherein the measuring device acquires central position information about a central position of an area formed by the molten pool formed at a position differing according to the processing beam deflected by the deflection optics, and
wherein the controller controls molding by the processing device on the basis of the central position information.

42. The processing system according to claim 41, wherein the controller controls at least one of a laser intensity and a heat input amount by performing fast laser modulation on the basis of a measurement result of the central position of the molten pool.

43. The processing system according to claim 42, wherein the controller controls a trajectory speed of the processing beam by operating a Galvano-mirror on the basis of the measurement result of the central position of the molten pool.

44. The processing system according to any one of claims 41 to 43,
wherein the measurement device measures the central position on the basis of a captured image, and
wherein the measurement device controls the molding so that the central position of the molten pool is located at a center of the image.

45. The processing system according to any one of claims 1 to 44, wherein the controller reads information about a size of the molten pool from the storage device and controls the processing device so that the size of the molten pool formed by radiating the processing beam coincides with the size of the molten pool read from the storage device.

46. A processing system comprising:
a processing device configured to mold a molding object and including irradiation optics capable of radiating a processing beam and a material supply unit capable of supplying a molding material to a portion where a molten pool is formed by radiating the processing beam;
a measuring device configured to acquire information about the molten pool formed on a first object by radiating the processing beam;
a storage device configured to store information about the molten pool acquired by the measuring device in association with information about a position of the molten pool; and
a controller,
wherein the controller reads the information about the molten pool from the storage device and controls the processing device so that a molten pool formed on a second object by radiating the processing beam reproduces the molten pool read from the storage device.

47. The processing system according to claim 46, wherein the controller controls the processing device so that the molten pool formed on the first object is reproduced on the second object on the basis of information about the molten pool read from the storage device corresponding to a position on the second object to which the processing beam is radiated.

48. The processing system according to claim 46 or 47,
wherein the molten pool formed on the first object is a molten pool formed to mold an M^{th} (M is a natural number and M > 0) layer of a first molding object, and
wherein the molten pool formed on the second object is a molten pool formed to mold an M^{th} layer of a second molding object different from that of the first object.

49. The processing system according to claim 46 or 47,
wherein the molten pool formed on the first object is a molten pool formed to mold an M^{th} (M is a natural number and M > 0) layer of the molding object, and
wherein the molten pool formed on the second object is a molten pool formed to mold an N^{th} (N is a natural number and N > M) layer of the molding object.

50. A processing system comprising:
a processing device including irradiation optics capable of radiating a processing beam and configured to process an object;
a measuring device configured to acquire information about a molten pool formed by radiating the processing beam;
a storage device configured to store information about the molten pool acquired by the measuring device in association with information about a position of the molten pool; and
a controller,
wherein the controller controls the processing device on the basis of the information about the molten pool read from the storage device.

51. A processing system comprising:
a processing device configured to process an object and including irradiation optics capable of radiating a processing beam, a first moving device capable of moving an irradiation position of the processing beam along a target trajectory based on a processing path, and a second moving device capable of moving the processing beam in a direction intersecting the target trajectory;
a measuring device capable of acquiring information about a molten pool formed by radiating the processing beam; and
a controller,
wherein the controller decides a measurement target area of the measuring device on the basis of a movement condition that is a condition for moving the processing beam in the second moving device.

52. A processing method comprising:
radiating a processing beam to an object;
molding a molding object by supplying a molding material to a portion where a molten pool is formed by radiating the processing beam;
acquiring information about a size of the molten pool formed by radiating the processing beam in molding an M^{th} layer of a first molding object;
storing the acquired information about the size of the molten pool in molding the M^{th} layer of the first molding object in association with information about a position of the molten pool; and
controlling formation of the molten pool in an M^{th} layer of a second molding object different from the first molding object on the basis of the information about the size of the molten pool of the M^{th} layer of the first molding object.

53. A processing method comprising:
radiating a processing beam to an object;
molding a molding object by supplying a molding material to a portion where a molten pool is formed by radiating the processing beam;
acquiring the information about the size of the molten pool formed by radiating the processing beam in molding of an M^{th} (M is a natural number and M > 0) layer of the molding object;
storing the acquired information about the size of the molten pool in the molding of the M^{th} layer of the molding object in association with information about a position of the molten pool; and
controlling formation of the molten pool in an N^{th} (N is a natural number and N > M) layer of the molding object on the basis of the information about the size of the molten pool of the M^{th} layer.

54. A processing method comprising:
radiating a processing beam to an object;
moving an irradiation position of the processing beam along a target trajectory based on a processing path;
deflecting the processing beam in a direction intersecting the target trajectory;
molding a molding object by supplying a molding material to a portion where a molten pool is formed by radiating the processing beam;
acquiring information about a size of the molten pool formed by radiating the processing beam; and
controlling molding on the basis of the acquired information about the size of the molten pool and changing a measurement target area of the molten pool for acquiring information about the size of the molten pool on the basis of a deflection condition that is a condition for deflecting the processing beam.

55. A processing method comprising:
radiating a processing beam to an object;
molding a molding object by supplying a molding material to a portion where a molten pool is formed by radiating the processing beam;
acquiring information about the molten pool formed by radiating the processing beam;
storing the acquired information about the molten pool in association with information about a position of the molten pool; and
reading the information about the molten pool and controlling the molding so that the molten pool formed by radiating the processing beam reproduces the read molten pool.
